# EUROPEAN PATENT APPLICATION

(11) **EP 4 250 797 A1**
(43) Date of publication of application: **27.09.2023**
(21) Application number: 20962026.9
(22) Date of filing: 20.11.2020
(51) Int. Cl.: H04W 24/02

(54) **BEAM INDICATION METHOD AND APPARATUS, AND COMMUNICATION DEVICE**

(71) Applicant: Beijing Xiaomi Mobile Software Co., Ltd., Beijing 100085 (CN)
(72) Inventor: LI, Mingju, Beijing 100085 (CN)
(74) Representative: dompatent von Kreisler Selting Werner - Partnerschaft von Patent- und Rechtsanwälten mbB
(86) International application number: PCT/CN2020/130583
(87) International publication number: WO 2022/104735

(57) **Abstract**

The present disclosure relates to the technical field of wireless communications, and provides a beam indication method and apparatus, and a communication device. The method comprises: a network device transmits, to a UE, first indication information used for indicating a target universal beam, so that after receiving the first indication information transmitted by the network device, the UE and the network device apply the target universal beam on at least two channels, or at least two reference signals, or at least one reference signal and at least one channel to perform communication transmission. Since the first indication information of the target universal beam is only transmitted once, the target universal beam can be used for multiple kinds of communication transmission, including reference signal transmission and channel transmission, thereby avoiding separately performing beam indication for each channel transmission or reference signal transmission, and reducing signaling overhead.

## Description

### TECHNICAL FIELD

The present disclosure relates to the technical field of wireless communication, and more particularly to a beam indication method and apparatus, and a communication device.

### BACKGROUND

In a wireless communication system, beams used for each channel are independently indicated. For example, respective beams of a physical downlink control channel (PDCCH), a physical downlink shared channel (PDSCH), a physical uplink control channel (PUCCH) and a physical uplink shared channel (PUSCH) need to be indicated, respectively. With this beam indication manner, the beam indication occupies a relatively large signaling overhead.

### SUMMARY

Embodiments of the present disclosure provide a beam indication method, a beam indication apparatus and a communication device.

According to a first aspect of embodiments of the present disclosure, there is provided a beam indication method, which is applied to a user equipment UE and includes: acquiring first indication information, in which the first indication information is configured to indicate a target unified beam; and performing at least two types of communication with a network device using the target unified beam. The communication includes communication of a channel and/or a reference signal.

Optionally, the first indication information includes a target unified transmission configuration indicator TCI state index or index combination.

Optionally, the target unified TCI state index corresponds to a transmission and reception point TRP index or a coreset pool index.

Optionally, the target unified TCI state index corresponds to one or more reference signals, and each of the one or more reference signals is configured to indicate at least one of an uplink target unified beam and a downlink target unified beam.

Optionally, acquiring the first indication information includes: receiving from the network device a control element signaling of a medium access control layer, MAC CE signaling, in which the MAC CE signaling carries second indication information for activating one or more TCI state indexes, and one TCI state index corresponds to one TRP index or one coreset pool index; and determining the first indication information according to the one or more TCI state indexes activated by the second indication information.

Optionally, one TCI state index is activated by the second indication information for one TRP index or one coreset pool index. Determining the first indication information according to the one or more TCI state indexes activated by the second indication information includes: determining the one TCI state index activated by the second indication information as the first indication information.

Optionally, multiple TCI state indexes are activated by the second indication information for one TRP index or one coreset pool index. Determining the first indication information according to the one or more TCI state indexes activated by the second indication information includes: receiving a first downlink control information DCI signaling transmitted by the network device. The first DCI signaling carries the first indication information. The first indication information includes one target unified TCI state index or index combination among the multiple TCI state indexes activated by the second indication information.

Optionally, the method further includes: transmitting first hybrid automatic repeat request HARQ feedback information to the network device. The first HARQ feedback information is configured to indicate to the network device whether the first DCI signaling is successfully received; and an HARQ feedback resource used for transmitting the first HARQ feedback information is configured by the first DCI signaling, or is default.

Optionally, performing at least two types of communication with the network device using the target unified beam includes: receiving, using the target unified beam on a PDCCH, a second DCI signaling transmitted by the network device. The second DCI signaling carries resource configuration information for configuring a communication resource for a reference signal, a physical random access channel PRACH, a physical uplink shared channel PUSCH, a physical uplink control channel PUCCH and/or a physical downlink shared channel PDSCH.

Optionally, the first DCI signaling further carries resource configuration information for configuring a communication resource for at least one of a reference signal, a PRACH, a PUSCH, a PUCCH or a PDSCH.

Optionally, the method further includes: transmitting second HARQ feedback information to the network device. The second HARQ feedback information includes: first feedback information, configured to feed back whether the first DCI signaling is successfully received; and/or second feedback information, configured to feed back whether the PDSCH or a downlink reference signal configured by the first DCI signaling is successfully received.

Optionally, HARQ feedback resources used for transmitting the first feedback information and/or the second feedback information are configured by the first DCI signaling or are default.

Optionally, the HARQ feedback resources used for transmitting the first feedback information and/or the second feedback information are the same HARQ feedback resources or different HARQ feedback resources.

Optionally, the first feedback information and/or the second feedback information correspond to the same or different bits in the same HARQ feedback resource.

Optionally, a transmitting beam for transmitting the first HARQ feedback information is a transmitting beam corresponding to a target unified beam corresponding to the target unified TCI state index or index combination in the first DCI signaling, or a transmitting beam corresponding to a receiving beam for receiving the first DCI signaling.

Optionally, a transmitting beam for transmitting the second HARQ feedback information is a transmitting beam corresponding to a target unified beam corresponding to the target unified TCI state index or index combination in the first DCI signaling, or a transmitting beam corresponding to a receiving beam for receiving the first DCI signaling.

Optionally, the method further includes: performing the communication with the network device using the communication resource configured according to the resource configuration information carried in the first DCI signaling.

Optionally, in a case where a time interval between the communication and the first DCI signaling is less than a threshold, the communication adopts a same beam as the first DCI signaling; and in a case where the time interval between the communication and the first DCI signaling is greater than or equal to the threshold, the communication adopts a target unified beam corresponding to the target unified TCI state index or index combination in the first DCI signaling.

Optionally, the threshold is notified by the network device. The method further includes: transmitting a reference time to the network device, and the reference time is configured to be used by the network device to determine the threshold. The reference time includes a time for decoding the first DCI signaling, a time for an HARQ feedback corresponding to the firs DCI signaling, and a time for beam switch; or the reference time includes the time for the HARQ feedback corresponding to the first DCI signaling and the time for the beam switch.

Optionally, the threshold is default to be set in the UE.

Optionally, the UE uses one or more receiving beams to receive one or more transmissions of the first DCI signaling.

Optionally, the first DCI signaling is a DCI signaling for downlink resource scheduling, a DCI signaling for uplink resource scheduling, or a DCI signaling for uplink and downlink resource scheduling, or a DCI signaling only for uplink and downlink target unified beam indication.

Optionally, the target unified TCI state index includes at least one of a downlink target unified TCI state index, an uplink target unified TCI state index, or an uplink and downlink target unified TCI state index.

Optionally, the method further includes: receiving third indication information transmitted by the network device. The third indication information is configured to indicate the UE to adopt the target unified beam or a dedicated beam to perform the at least two types of communication.

Optionally, the first indication information further includes indication information of the at least two types of communication.

Optionally, the channel includes at least one of or any combination of the following channels:
a physical downlink control channel, PDCCH;
a physical downlink shared channel, PDSCH;
a physical uplink control channel, PUCCH;
a physical uplink shared channel, PUSCH;
a physical broadcast channel, PBCH; or
a physical random access channel, PRACH.

Optionally, the reference signal includes at least one of or any combination of the following signals:
a channel state information-reference signal, CSI-RS;
a synchronization signal and PBCH block, SSB;
a demodulation reference signal, DMRS;
a positioning reference signal, PRS;
a tracking reference signal, TRS; or
a sounding reference signal, SRS.

According to a second aspect of embodiments of the present disclosure, there is provided a beam indication method, which is applied to a network device and includes: transmitting first indication information to a user equipment UE. The first indication information is configured to indicate a target unified beam to enable the UE to perform at least two types of communication with the network device using the target unified beam, and the communication includes communication of a channel and/or a reference signal.

Optionally, the first indication information includes a target unified transmission configuration indicator TCI state index or index combination.

Optionally, the target unified TCI state index corresponds to a transmission and reception point TRP index or a coreset pool index.

Optionally, the target unified TCI state index corresponds to one or more reference signals, and each of the one or more reference signals is configured to indicate at least one of an uplink target unified beam and a downlink target unified beam.

Optionally, transmitting the first indication information to the user equipment UE includes: transmitting to the UE a control element signaling of a medium access control layer, MAC CE signaling. The MAC CE signaling carries second indication information for activating one or more TCI state indexes, and one TCI state index corresponds to one TRP index or one coreset pool index. The one or more TCI state indexes activated by the second indication information are configured to determine the first indication information.

Optionally, one TCI state index is activated by the second indication information for one TRP index or one coreset pool index; and the first indication information represents the one TCI state index activated by the second indication information.

Optionally, multiple TCI state indexes are activated by the second indication information for one TRP index or one coreset pool index, and transmitting the first indication information to the user equipment UE further includes: transmitting a first downlink control information DCI signaling to the UE, and the first DCI signaling carries the first indication information. The first indication information includes one target unified TCI state index or index combination among the multiple TCI state indexes activated by the second indication information.

Optionally, the method further includes: receiving first hybrid automatic repeat request HARQ feedback information transmitted by the UE. The first HARQ feedback information is configured to indicate to the network device whether the first DCI signaling is successfully received; and an HARQ feedback resource used for transmitting the first HARQ feedback information is configured by the first DCI signaling, or is default.

Optionally, the method further includes: transmitting a second DCI signaling to the UE on a PDCCH, so that the UE receives the second DCI signaling using the target unified beam. The second DCI signaling carries resource configuration information for configuring a communication resource for a reference signal, a physical random access channel PRACH, a physical uplink shared channel PUSCH, a physical uplink control channel PUCCH and/or a physical downlink shared channel PDSCH.

Optionally, the first DCI signaling further carries resource configuration information for configuring a communication resource for at least one of a reference signal, a PRACH, a PUSCH, a PUCCH or a PDSCH.

Optionally, the method further includes: receiving second HARQ feedback information transmitted by the UE. The second HARQ feedback information includes: first feedback information, configured to feed back whether the first DCI signaling is successfully received; and/or second feedback information, configured to feed back whether the PDSCH and/or a downlink reference signal configured by the first DCI signaling is successfully received.

Optionally, HARQ feedback resources used for transmitting the first feedback information and/or the second feedback information are configured by the first DCI signaling or are default.

Optionally, the HARQ feedback resources used for transmitting the first feedback information and/or the second feedback information are the same HARQ feedback resources or different HARQ feedback resources.

Optionally, the first feedback information and/or the second feedback information correspond to the same or different bits in the same HARQ feedback resource.

Optionally, a transmitting beam for transmitting the first HARQ feedback information is a transmitting beam corresponding to a target unified beam corresponding to the target unified TCI state index or index combination in the first DCI signaling, or a transmitting beam corresponding to a receiving beam for receiving the first DCI signaling.

Optionally, a transmitting beam for transmitting the second HARQ feedback information is a transmitting beam corresponding to a target unified beam corresponding to the target unified TCI state index or index combination in the first DCI signaling, or a transmitting beam corresponding to a receiving beam for receiving the first DCI signaling.

Optionally, the method further includes: performing the communication with the UE according to the resource configuration information carried in the first DCI signaling.

Optionally, an indication that a time interval between the communication and the first DCI signaling is less than a threshold represents an indication that the UE performs the communication using a same beam as the first DCI signaling; and an indication that the time interval between the communication and the first DCI signaling is greater than or equal to the threshold represents an indication that the UE performs the communication using a target unified beam corresponding to the target unified TCI state index or index combination in the first DCI signaling.

Optionally, the method further includes: transmitting a threshold indication to the UE according to a reference time transmitted by the UE. The reference time includes a time for the UE to decode the first DCI signaling, a time for the UE to perform an HARQ feedback corresponding to the first DCI signaling, and a time for beam switch; or the reference time includes the time for the UE to perform the HARQ feedback corresponding to the first DCI signaling and the time for the beam switch.

Optionally, the first DCI signaling is transmitted for one or more times, and the UE is indicated to receive the first DCI signaling using one or more receiving beams.

Optionally, the first DCI signaling is a DCI signaling for downlink resource scheduling, a DCI signaling for uplink resource scheduling, a DCI signaling for uplink and downlink resource scheduling, or a DCI signaling only for uplink and downlink target unified beam indication.

Optionally, the target unified TCI state index includes at least one of a downlink target unified TCI state index, an uplink target unified TCI state index, or an uplink and downlink target unified TCI state index.

Optionally, the method further includes: transmitting third indication information to the UE. The third indication information is configured to indicate the UE to adopt the target unified beam or a dedicated beam to perform the at least two types of communication.

Optionally, the first indication information further includes indication information of the at least two types of communication.

Optionally, the channel includes at least one of or any combination of the following channels:
a physical downlink control channel, PDCCH;
a physical downlink shared channel, PDSCH;
a physical uplink control channel, PUCCH;
a physical uplink shared channel, PUSCH;
a physical broadcast channel, PBCH; or
a physical random access channel, PRACH.

Optionally, the reference signal includes at least one of or any combination of the following signals:
a channel state information-reference signal, CSI-RS;
a synchronization signal and PBCH block, SSB;
a demodulation reference signal, DMRS;
a positioning reference signal, PRS;
a tracking reference signal, TRS; or
a sounding reference signal, SRS.

According to a third aspect of embodiments of the present disclosure, there is provided a beam indication apparatus, which is applied to a user equipment UE and includes an acquiring module and an executing module. The acquiring module is configured to acquire first indication information, and the first indication information is configured to indicate a target unified beam. The executing module is configured to perform at least two types of communication with a network device using the target unified beam, and the communication includes communication of a channel and/or a reference signal.

According to a fourth aspect of embodiments of the present disclosure, there is provided a beam indication apparatus, which applied to a network device and includes an indication module. The indication module is configured to transmit first indication information to a user equipment UE. The first indication information is configured to indicate a target unified beam to enable the UE to perform at least two types of communication with the network device using the target unified beam, and the communication includes communication of a channel and/or a reference signal.

According to a fifth aspect of embodiments of the present disclosure, there is provided a communication device, which includes a transceiver; a memory; and a processor. The processor is connected to the transceiver and the memory, respectively, and configured to control wireless signal transmission and reception of the transceiver by executing computer-executable instructions stored in the memory, and implement the beam indication method as described in the first aspect or the second aspect.

According to a sixth aspect of embodiments of the present disclosure, there is provided a computer storage medium having stored therein computer-executable instructions that, when executed by a processor, cause the beam indication method as described in the first aspect or the second aspect to be implemented.

In the beam indication method, the beam indication apparatus and the communication device according to embodiments of the present disclosure, the first indication information for indicating the target unified beam is transmitted to the UE by the network device, so that after receiving the first indication information transmitted by the network device, the UE communicates with the network device using the target unified beam on at least two channels, or at least two reference signals, or at least one reference signal and at least one channel. Through just once communication of the first indication information of the target unified beam, the target unified beam can be used for multiple types of communication including the reference signal communication and the channel communication, so that separate beam indications for each channel communication or reference signal communication are avoided, thereby saving the signaling overheads.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions of embodiments made with reference to the drawings, in which:
FIG. 1 is a schematic flowchart of a beam indication method provided by embodiments of the present disclosure;
FIG. 2 is a schematic flowchart of another beam indication method provided by embodiments of the present disclosure;
FIG. 3 is a schematic flowchart of another beam indication method provided by embodiments of the present disclosure;
FIG. 4 is a schematic flowchart of another beam indication method provided by embodiments of the present disclosure;
FIG. 5 is a schematic flowchart of another beam indication method provided by embodiments of the present disclosure;
FIG. 6 is a schematic flowchart of a beam indication method provided by embodiments of the present disclosure;
FIG. 7 is a schematic flowchart of another beam indication method provided by embodiments of the present disclosure;
FIG. 8 is a schematic flowchart of another beam indication method provided by embodiments of the present disclosure;
FIG. 9 is a schematic flowchart of another beam indication method provided by embodiments of the present disclosure;
FIG. 10 is a schematic flowchart of another beam indication method provided by embodiments of the present disclosure;
FIG. 11 is a schematic block diagram of a beam indication apparatus 110 provided by embodiments of the present disclosure;
FIG. 12 is a schematic block diagram of a beam indication apparatus 120 provided by embodiments of the present disclosure;
FIG. 13 is a block diagram of a communication device of a beam indication method according to embodiments of the present disclosure.

### DETAILED DESCRIPTION

Illustrative embodiments will be described in detail herein, examples of which are illustrated in the accompanying drawings. Where the following description refers to the drawings, the same numerals in different drawings represent the same or similar elements unless otherwise indicated. The implementations set forth in the following Illustrative embodiments are not intended to represent all implementations consistent with embodiments of the present disclosure. Rather, they are merely examples of apparatus and methods consistent with some aspects of embodiments of the present disclosure, as recited in the appended claims.

Terms used in embodiments of the present disclosure are only for the purpose of describing specific embodiments, but not intended to limit embodiments of the present disclosure. As used in embodiments of the present disclosure and the appended claims, "a/an", "said" and "the" in singular forms are intended to include plural forms, unless clearly indicated otherwise in the context. It should also be understood that, the term "and/or" used herein represents and contains any or all possible combinations of one or more associated listed items.

It should be understood that, although terms such as "first," "second" and "third" may be used in embodiments of the present disclosure to describe various information, these information should not be limited by these terms. These terms are only used for distinguishing the same type of information from each other. For example, first information may also be referred to as second information, and similarly, the second information may also be referred to as the first information, without departing from the scope of embodiments of the present disclosure. Depending on the context, the term "if' as used herein may be interpreted as "when", "upon" or "in response to determining".

Embodiments of the present disclosure will be described in detail below, examples of which are shown in the accompanying drawings, in which the same or similar elements are denoted by like reference numerals throughout the descriptions. The embodiments described herein with reference to the accompanying drawings are illustrative, which are intended to explain the present disclosure, but shall not be construed to limit the present disclosure.

In the related art, beams in channels like a physical downlink control channel (PDCCH), a physical uplink control channel (PUCCH), a physical downlink shared channel (PDSCH), and a physical uplink shared channel (PUSCH) are indicated by independent signaling, respectively, resulting in large signaling overheads. In order to solve the technical problem of large signaling overheads, in embodiments of the present disclosure, a method of using a target unified beam for channels and/or reference signals is adopted, so that a network device only needs to transmit first indication of the target unified beam once, the target unified beam may be used for various types of communication including reference signal communication and channel communication, thereby avoiding separate beam indications for each channel communication or reference signal communication, and thus saving the signaling overheads.

A beam indication method, a beam indication apparatus and a communication device provided by the present disclosure will be described in detail below with reference to the accompanying drawings.

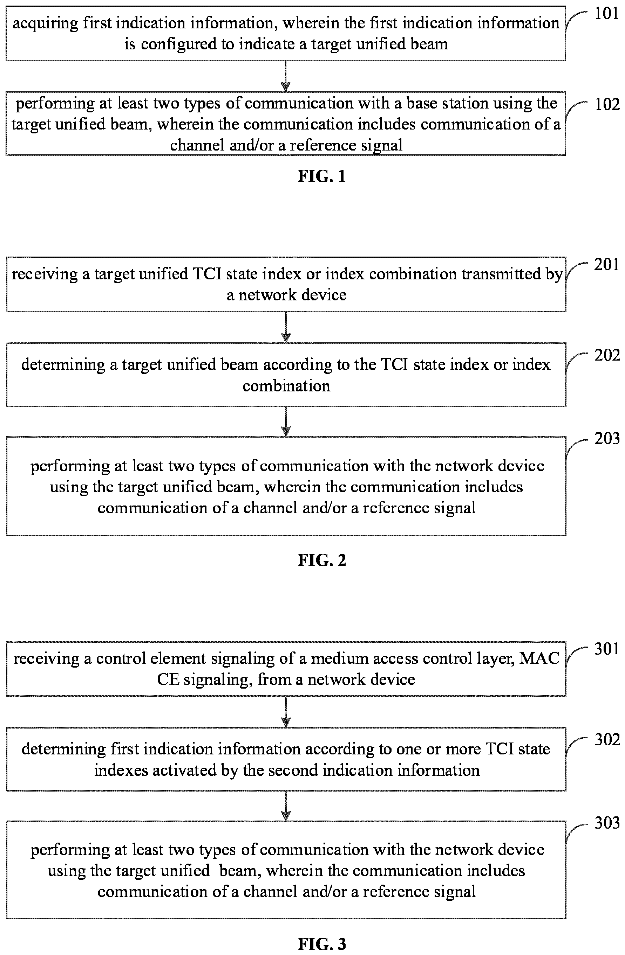

FIG. 1 is a schematic flowchart of a beam indication method provided by embodiments of the present disclosure, which is applied to a user equipment (UE).

As shown in FIG. 1, the beam indication method includes the following steps.

In step 101, first indication information is acquired. The first indication information is configured to indicate a target unified beam.

The beam indication method according to embodiments of the present disclosure may be applied to any user equipment. User equipment may be distributed throughout a mobile communication system, and each user equipment may be stationary or mobile. The user equipment may also be referred to by those skilled in the art as a mobile station, a subscriber station, a mobile unit, a subscriber unit, a wireless unit, a remote unit, a mobile device, a terminal device, a wireless device, a wireless communication device, a remote device, a mobile subscriber station, an access user equipment, a mobile user equipment, a wireless user equipment, a remote user equipment, a handheld device, a user agent, a mobile client, a client, or some other appropriate term. The user equipment may be a cellular phone, a personal digital assistant (PDA), a wireless modem, a wireless communication device, a handheld device, a tablet computer, a laptop computer, a cordless phone, a wireless local loop (WLL) stations, or the like that can communicate with the network device in the mobile communication system.

The first indication information may be carried in a control signaling, such as a radio resource control (RRC) signaling, a control element (CE) signaling of a medium access control (MAC) layer, abbreviated as an MAC CE signaling, a downlink control information (DCI) signaling, or a combination of at least two of these signalings. In embodiments of the present disclosure, the bearing manner of the first indication information of the target unified beam is not limited.

In step 102, at least two types of communication are performed with a network device using the target unified beam. The communication includes communication of a channel and/or a reference signal.

The network device is deployed in a wireless access network to provide a wireless access function for the user equipment. The network device may be a base station (BS). The network device may wirelessly communicate with the user equipment via one or more antennas. The network device can provide communication coverage for a geographic area where it is located. The base station may include different types, such as a macro base station, a micro base station, a relay station, and an access point. In some embodiments, the base station may be referred to by those skilled in the art as a base station transceiver, a wireless base station, an access point, a wireless transceiver, a basic service set (BSS), an extended service set (ESS), a NodeB, an evolved NodeB (eNB or eNodeB) or other appropriate term. For example, in a 5G system, the base station is called as gNB. For convenience of description, in embodiments of the present disclosure, the foregoing apparatuses for providing the wireless communication function for the user equipment are collectively referred to as the network device.

As an example, the channel includes at least one of or any combination of the following channels:
a physical downlink control channel, PDCCH;
a physical downlink shared channel, PDSCH;
a physical uplink control channel, PUCCH;
a physical uplink shared channel, PUSCH;
a physical broadcast channel, PBCH; or
a physical random access channel, PRACH.

As an example, the reference signal includes at least one of or any combination of the following signals:
a channel state information-reference signal, CSI-RS;
a synchronization signal and PBCH block, SSB;
a demodulation reference signal, DMRS;
a positioning reference signal, PRS;
a tracking reference signal, TRS; or
a sounding reference signal, SRS.

The above-mentioned reference signals can be used in different scenarios, for example, beam measurement, channel state information measurement, path loss estimation, antenna switching, positioning measurement, channel estimation or synchronization tracking during demodulation, etc., which will not be listed one by one in embodiments of the present disclosure. Furthermore, the channels and reference signals listed above are only examples, and do not limit the present disclosure.

In embodiments of the present disclosure, the target unified beam is applied to the communication between the user equipment and the network device. According to the direction of the communication, the at least two types of communication may include channels and/or reference signals that belong to uplink communication; channels and/or reference signals that belong to downlink communication; or channels and/or reference signals some of which are used for the uplink communication, and some of which are used for the downlink communication. In the following, several possible implementations are described, respectively.

As a first possible implementation, the target unified beam may be used for communication of at least two channels. For example, the target unified beam may be used for the PDSCH channel and the PDCCH channel, where the PDSCH channel includes all PDSCH channels or only includes a part of PDSCH channels, such as UE dedicated PDSCH channels; and the PDCCH channel includes all PDCCH channels or only includes a part of PDCCH channels, such as UE dedicated PDCCH channels. Alternatively, for another example, the target unified beam may be used for the PUSCH channel and the PUCCH channel, where the PUSCH channel includes all PUSCH channels or only includes a part of PUSCH channels, such as UE dedicated PUSCH channels, and the PUCCH channel includes all PUCCH channels or only includes a part of PUCCH channels, such as UE dedicated PUCCH channels. For another example, the target unified beam may be used for the PUSCH channel and the PDSCH channel, where the PUSCH channel includes all PUSCH channels or only includes a part of PUSCH channels, such as UE dedicated PUSCH channels, and the PDSCH channel includes all PDSCH channels or only includes a part of PDSCH channels, such as UE dedicated PDSCH channels. In a case where the target unified beam is used for the PDSCH channel and the PDCCH channel, the target unified beam may be called a downlink target unified beam (DL unified beam). In a case where the target unified beam is used for the PUSCH channel and the PUCCH channel, the target unified beam may be called an uplink target unified beam (UI unified beam). In a case where the target unified beam is used for the PUSCH channel and the PDSCH channel, the target unified beam is called a unified beam, that is, it can be used for both the uplink channel and the downlink channel.

As a second possible implementation, the target unified beam may be used for communication of at least two reference signals. The at least two reference signals used herein may each belong to a downlink reference signal, or may each belong to an uplink reference signal, or may be a hybrid of the downlink reference signal and the uplink reference signal, which is not limited in embodiments of the present disclosure. For example, the downlink reference signal may include at least one of an SSB, a CSI-RS, a PRS, a TRS, or a DMRS. Alternatively, for another example, the uplink reference signal may include at least one of an SRS or a DMRS. For some reference signals, such as the CSI-RS, the reference signal may include all CSI-RSs; or instead of all CSI-RSs, the reference signal may include one or more CSI-RSs for at least one purpose, such as for at least one of channel state information measurement, beam measurement, path loss estimation, or positioning measurement. For another example, the SRS may include all SRSs; or instead of all SRSs, the SRS may include one or more SRSs for at least one purpose, such as for at least one of codebook based channel state information measurement, non-codebook based channel state information measurement, beam measurement, antenna switching, or positioning measurement.

As a third possible implementation, the target unified beam may be used for communication of at least one reference signal and at least one channel. For example, the target unified beam may be used for communication of the PDSCH channel and the downlink reference signal, and the downlink reference signal may include at least one of an SSB, a CSI-RS, a PRS, a TRS, or a DMRS. Alternatively, for another example, the target unified beam may be used for communication of the PUSCH and the uplink reference signal, and the uplink reference signal may include at least one of an SRS or a DMRS. Similarly, the PDSCH here may include all PDSCHs, or only includes a part of PDSCHs, such as UE dedicated PDSCHs; the PUSCH here may include all PUSCHs, or only includes a part of PUSCHs, such as UE dedicated PUSCHs; and the reference signal here, such as the CSI-RS or the SRS, may include CSI-RS(s) or SRS(s) for all purposes or for at least one purpose.

It should be noted that the downlink channels, the uplink channels, the downlink reference signals and the uplink reference signals mentioned above are only used for illustration, and specific implementations are not limited to these several types of channels or reference signals listed above, which cannot be construed to limit the scope of the present disclosure.

In a possible implementation of embodiments of the present disclosure, the first indication information further includes indication information of the at least two types of communication. That is, the indication information indicates specific types of the at least two types of communication determined for the user equipment to perform the communication with the network device using the target unified beam. For example, the indication information indicates that the communication to be performed between the user equipment and the network device using the target unified beam is PDSCH channel communication and PDCCH channel communication. Further, implementations of the at least two types of communication have been described above, which will not be elaborated here.

In embodiments of the present disclosure, the target unified beam may be a single beam or may include multiple beams, which is not limited in embodiments of the present disclosure.

In a case where the target unified beam includes multiple beams, a respective target unified beam corresponding to each transmission and reception point (TRP) or a respective target unified beam corresponding to each control resource set pool index (coreset pool index) needs to be determined according to the first indication information transmitted by the network device, so that a target TCI state index in the first indication information should correspond to a TRP index or a coreset pool index.

In embodiments of the present disclosure, the first indication information is transmitted to the UE by the network device, so that after receiving the first indication information transmitted by the network device, the UE communicates with the network device using the target unified beam on at least two channels, or at least two reference signals, or at least one reference signal and at least one channel. Through just once communication of the first indication information of the target unified beam, the target unified beam can be used for multiple types of communication including the reference signal communication and the channel communication, so that separate beam indications for each channel communication or reference signal communication are avoided, thereby saving the signaling overheads.

FIG. 2 is a schematic flowchart of another beam indication method provided by embodiments of the present disclosure, which is applied to a user equipment (UE).

Based on the beam indication method provided in FIG. 2, an indication manner of the target unified beam is illustrated. As shown in FIG. 2, the method includes the following steps.

In step 201, a target unified transmission configuration indicator (TCI) state index or index combination transmitted by a network device is received.

Regarding the illustrations of the user equipment and the network device, reference may be made to the explanations and descriptions in any of the foregoing embodiments, which will not be elaborated in embodiments here.

In embodiments of the present disclosure, the first indication information received by the user equipment includes the target unified transmission configuration indicator TCI state index or index combination transmitted by the network device. The target unified TCI state index combination may be determined by a combination identifier. For example, 01 and 02 indicate different index combinations, respectively. Alternatively, different index combinations may be indicated by different code points. For example, 3-bit code points 000 and 001 indicate different index combinations, respectively. One or more TCI state indexes are included in different index combinations. There may be one or more target unified TCI state indexes. Each target unified TCI state index corresponds to one or more reference signals (RSs), and each reference signal is used to indicate at least one of the uplink target unified beam and the downlink target unified beam.

In embodiments of the present disclosure, the target unified TCI state index includes at least one of a downlink target unified TCI state index, an uplink target unified TCI state index, or an uplink and downlink target unified TCI state index.

It should be understood that a reference signal corresponding to the downlink target unified TCI state index, such as an RS, is not used to indicate a target unified beam of an uplink channel or an uplink reference signal; and a reference signal corresponding to the uplink target unified TCI state index, such as an RS, is not used to indicate a target unified beam of a downlink channel or a downlink reference signal. One or more reference signals corresponding to the uplink and downlink target unified TCI state index, such as one or more RSs, may indicate a target unified beam of uplink communication or a target unified beam of downlink communication at the same time. For example, the target unified beam of the uplink communication and the target unified beam of the downlink communication may be indicated by one reference signal (RS), or may be indicated by one reference signal (RSs), respectively.

As an implementation, the network device configures a correspondence between target unified TCI state indexes and reference signals (RSs) for the UE through a radio resource control (RRC) signaling. After acquiring the target TCI state index, the UE queries the above correspondence between TCI state indexes and RSs according to the target TCI state index to obtain a reference signal RS corresponding to the target TCI state index. Correspondingly, the UE determines a corresponding beam according to the reference signal RS. Optionally, the correspondence between TCI state indexes and RSs may be a TCI table or in other forms, and the correspondence in the form of a TCI table is used as an example for illustration. The TCI table may include TCI state indexes (i.e., TCI state IDs), reference signal indexes (reference signal IDs, RS IDs) and the like information.

It should be noted that, when what acquired is the target unified TCI state index combination, multiple target unified TCI state indexes included therein are determined according to a mapping relationship between identifiers of index combinations or bit-displayed codepoints and the index combinations, and a corresponding target unified beam is determined according to the pre-configured correspondence between TCI state indexes and RS indexes.

As a possible implementation, the TCI state index transmitted by the network device may indicate one of the uplink target unified beam or the downlink target unified beam. That is, the uplink target unified TCI state index is used to indicate the uplink target unified beam, and the downlink target unified TCI state index is used to indicate the downlink target unified beam.

As another possible implementation, the target unified TCI state index transmitted by the network device may be used to indicate the uplink target unified beam and the downlink target unified beam. As an implementation, the target unified TCI state index transmitted by the network device indicates a corresponding RS for each TRP, that is, the RS indicates both the uplink target unified beam and the downlink target unified beam. As another implementation, the target unified TCI state index transmitted by the network device indicates a corresponding RS for each TRP, and this RS may indicate the uplink target unified beam or the downlink target unified beam. As yet another implementation, the target unified TCI state index transmitted by the network device indicates two corresponding RSs for each TRP, one of the two RSs is used to indicate the uplink target unified beam, and the other one of the two RSs is used to indicate the downlink target unified beam.

It should be noted that, the target unified TCI state index corresponds to one transmission and reception point TRP index or one coreset pool index. That is, the target unified TCI state index is universal for multiple communication with the one TRP, while different TRPs use different target unified TCI state indexes; and the target unified TCI state index is universal for multiple communication with the one coreset pool index, while different coreset pool indexes use different target unified TCI state indexes.

It should be understood that, in an embodiment, in a case of one TRP, the determined unified beam is the beam corresponding to the TRP. In another embodiment, in a case of multiple TRPs, different TRPs have respective target unified TCI state indexes, and the target unified TCI state index has a corresponding RS, and according to the target unified beam corresponding to the RS, the target unified beam corresponding to the respective TPR can be determined.

In step 202, a target unified beam is determine according to the TCI state index or index combination.

The index combination includes multiple TCI state indexes, and each of the multiple TCI state indexes corresponds to a different TRP.

The network device may pre-configure the correspondence between target unified TCI state indexes and RSs for the UE through a higher-layer signaling, such as a radio resource control (RRC) signaling or a control element (CE) signaling of a medium access control layer (MAC). According to the pre-configured correspondence, the UE may determine a corresponding target unified beam according to a target unified TCI state index dynamically indicated by the network device.

In step 203, at least two types of communication with the network device are performed using the target unified beam. The communication includes communication of a channel and/or a reference signal.

In embodiments of the present disclosure, the step 203 may be implemented using any implementation as described in various embodiments of the present disclosure, which is not limited in embodiments of the present disclosure here, and will not be elaborated here.

In embodiments of the present disclosure, the first indication information of the target unified beam is transmitted to the UE by the network device, so that after receiving the first indication information of the target unified beam transmitted by the network device, the UE communicates with the network device using the target unified beam on at least two channels, or at least two reference signals, or at least one reference signal and at least one channel. Through just once communication of the first indication information of the target unified beam, the target unified beam can be used for multiple types of communication including the reference signal communication and the channel communication, so that separate beam indications for each channel communication or reference signal communication are avoided, thereby saving the signaling overheads.

FIG. 3 is a schematic flowchart of another beam indication method provided by embodiments of the present disclosure, and the method is executed by a UE.

Embodiments of the present disclosure provide a possible carrying manner of the first indication information of the target unified beam. As shown in FIG. 3, the method includes the following steps.

In step 301, a control element signaling of a medium access control layer, MAC CE signaling, is received from a network device. The MAC CE signaling carries second indication information for activating one or more TCI state indexes, and one TCI state index corresponds to one TRP index or one coreset pool index.

Regarding the illustrations of the user equipment and the network device, reference may be made to the explanations and descriptions in any of the foregoing embodiments, which will not be elaborated in embodiments here.

The MAC CE signaling includes an indication bit, and the indication bit records the second indication information for activating one or more TCI state indexes. That is, the second indication information indicates the one or more TCI state indexes to be activated.

Optionally, the MAC CE has a corresponding indication bit for each TCI state index, so that the UE determines a corresponding TCI state index according to the second indication information in the indication bit, and one TCI state index corresponds to one TRP index or one coreset pool index.

It should be noted that the beam includes an uplink beam, a downlink beam, and an uplink and downlink unified beam, and one or more beams may be activated for each TRP. The one or more beams activated may include at least one uplink beam, and/or at least one downlink beam, or at least one uplink and downlink unified beam. In embodiments of the present disclosure, the number of activated beams is not limited.

In step 302, the first indication information is determined according to the one or more TCI state indexes activated by the second indication information.

The first indication information is used to indicate the target unified beam.

In embodiments of the present disclosure, one TCI state index corresponds to one TRP index or one coreset pool index.

In a possible scenario, one TCI state index is activated by the second indication information for one TRP index or one coreset pool index, so that the one TCI state index activated by the second indication information is determined as the first indication information. For example, one TCI state index is activated for one TRP, so a TCI state index corresponding to the TRP is the activated TCI state index. In an example, the activated TCI state index corresponds to a downlink target unified TCI state index, then a reference signal corresponding to the activated TCI state index indicates a downlink target unified beam, and the downlink target unified beam of the TRP is the downlink beam indicated by the reference signal corresponding to the TCI state index. In another example, the activated TCI state index corresponds to an uplink target unified TCI state index, then a reference signal corresponding to the activated TCI state index indicates an uplink target unified beam, and the uplink target unified beam of the TRP is the uplink beam indicated by the reference signal corresponding to the TCI state index. In another example, the activated TCI state index corresponds to a target unified TCI state index, then a reference signal corresponding to the activated TCI state index indicates an uplink target unified beam and a downlink target unified beam, and the uplink target unified beam and the downlink target unified beam of the TRP are the uplink beam and the downlink beam indicated by the reference signal corresponding to the TCI state index.

In another possible scenario, multiple TCI state indexes are activated by the second indication information for one TRP index or one coreset pool index, so that it needs to determine a target TCI state index or index combination corresponding to the respective TRP index or coreset pool index from the multiple TCI state indexes as the first indication information. As an implementation, a first downlink control information DCI signaling is received from the network device. The first DCI signaling carries the first indication information, and the first indication information includes one target unified TCI state index or index combination among the multiple TCI state indexes activated by the second indication information.

It should be noted that the index combination includes multiple unified TCI state indexes, and different TCI state indexes correspond to different TRPs or different coreset pool indexes.

In step 303, at least two types of communication with the network device are performed using the target unified beam. The communication includes communication of a channel and/or a reference signal.

In embodiments of the present disclosure, the step 303 may be implemented using any implementation as described in various embodiments of the present disclosure, which is not limited in embodiments of the present disclosure here, and will not be elaborated here.

In embodiments of the present disclosure, the first indication information of the target unified beam is transmitted to the UE by the network device, so that after receiving the first indication information of the target unified beam transmitted by the network device, the UE communicates with the network device using the target unified beam on at least two channels, or at least two reference signals, or at least one reference signal and at least one channel. Through just once communication of the first indication information of the target unified beam, the target unified beam can be used for multiple types of communication including the reference signal communication and the channel communication, so that separate beam indications for each channel communication or reference signal communication are avoided, thereby saving the signaling overheads.

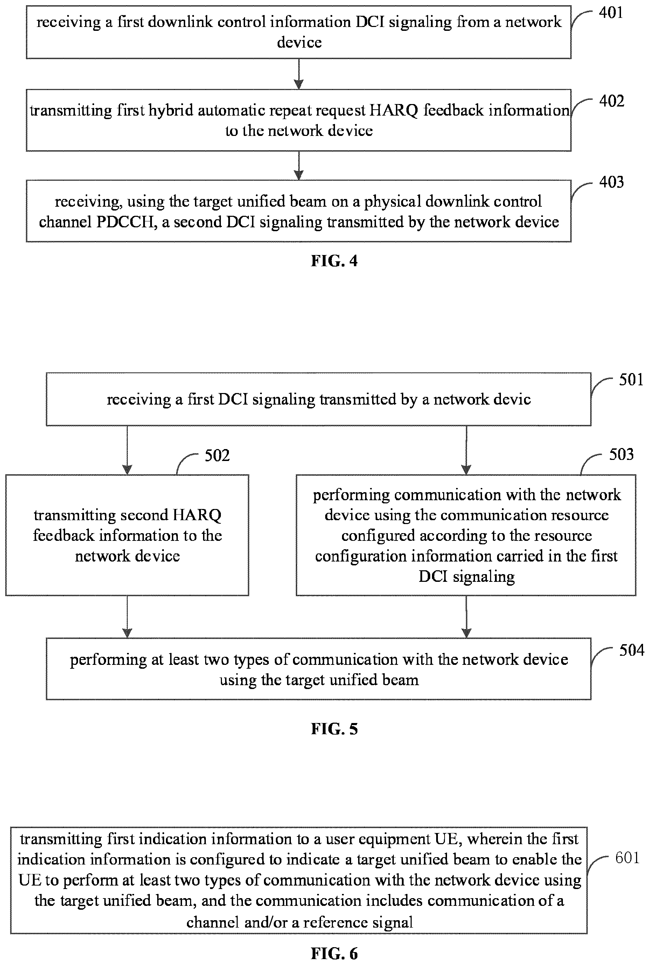

FIG. 4 is a schematic flowchart of another beam indication method provided by embodiments of the present disclosure, and the method is executed by a UE.

Embodiments of the present disclosure provide a possible carrying manner of the first indication information of the target unified beam. As shown in FIG. 4, the method includes the following steps.

In step 401, a first downlink control information DCI signaling is received from a network device.

Regarding the illustrations of the user equipment and the network device, reference may be made to the explanations and descriptions in any of the foregoing embodiments, which will not be elaborated in embodiments here.

The first DCI signaling includes first indication information of a target unified beam. That is, the target unified TCI state index or index combination and the resource configuration information are in different DCI signalings, and what included in the first DCI signaling is the target unified TCI state index or index combination, i.e., the first indication information.

The first DCI signaling may be based on a single TRP or based on multiple TRPs, which is not limited in embodiments of the present disclosure.

In a possible implementation of embodiments of the present disclosure, the UE uses one or more receiving beams to receive one or more transmissions of the first DCI signaling, that is, the network device uses one or more TRPs to perform one or more transmissions of the first DCI signaling, and each TRP corresponds to a different beam, which avoids the block of signal communication and improves the communication quality, so as to ensure that the first DCI signaling can be received.

In step 402, first hybrid automatic repeat request HARQ feedback information is transmitted to the network device.

The first HARQ feedback information is used to indicate to the network device whether the first DCI signaling is successfully received.

An HARQ feedback resource used for transmitting the first HARQ feedback information is configured by the first DCI signaling or is default.

In a possible scenario, the first DCI signaling is transmitted by the network device for one time, and correspondingly, there may be one or more candidate PUCCH/PUSCH resources for the UE to transmit the first HARQ feedback information.

In another possible scenario, the first DCI signaling is transmitted by the network device for multiple times, and correspondingly, there may be one or more candidate PUCCH/PUSCH resources for the UE to transmit the first HARQ feedback information.

Optionally, the UE transmits the first HARQ feedback information every time it receives the first DCI signaling.

Alternatively, the network device repeatedly transmits the first DCI signaling at N transmitting times, respectively, and correspondingly, the UE is configured with L candidate PUCCH/PUSCH resources for transmitting the first HARQ feedback information, where L is less than or equal to N, some of the L candidate PUCCH/PUSCH resources are before the end of the N transmitting times, and some are after the end of the N transmitting times. In a case where the UE correctly receives the first DCI signaling before the N transmitting times, the UE may select a candidate PUCCH/PUSCH resource to transmit the first HARQ feedback information before the N transmitting times. In a case where the UE correctly receives the first DCI signaling at or after the end of the N transmitting times, the UE may select another candidate PUCCH/PUSCH resource to transmit the first HARQ feedback information after the end of the N transmitting times.

Alternatively, the network device repeatedly transmits the first DCI signaling at N transmitting times, respectively, and correspondingly, the UE is configured with one candidate PUCCH/PUSCH resource for transmitting the first HARQ feedback information, and the UE may transmit the first HARQ feedback information after the end of the N transmitting times.

Further, during subsequent communication of the UE with the network device, the UE uses the target unified beam to perform at least two types of communication with the network device. The communication includes communication of a channel and/or a reference signal.

In an example of embodiments of the present disclosure, a transmitting beam for transmitting the first HARQ feedback information is a transmitting beam corresponding to a target unified beam corresponding to the target unified TCI state index or index combination in the first DCI signaling.

In another example of embodiments of the present disclosure, a transmitting beam for transmitting the first HARQ feedback information is a transmitting beam corresponding to a receiving beam for receiving the first DCI signaling.

In step 403, a second DCI signaling transmitted by the network device is received using the target unified beam on a physical downlink control channel PDCCH.

In embodiments of the present disclosure, for convenience of description, a DCI signaling carrying communication resource configuration information is referred to as the second DCI signaling.

The second DCI signaling carries resource configuration information for configuring a communication resource for a reference signal, a physical random access channel PRACH, a physical uplink shared channel PUSCH, a physical uplink control channel PUCCH and/or a physical downlink shared channel PDSCH.

The configured reference signal may specifically include at least one of the following reference signals:
a channel state information-reference signal, CSI-RS;
a synchronization signal and PBCH block, SSB;
a demodulation reference signal, DMRS;
a positioning reference signal, PRS;
a tracking reference signal, TRS; or
a sounding reference signal, SRS.

The above-mentioned reference signals can be used in different scenarios, for example, beam measurement, channel state information measurement, path loss estimation, antenna switching, positioning measurement, channel estimation or synchronization tracking during demodulation, etc., which will not be listed one by one in embodiments of the present disclosure. In specific implementations, it is not limited to the several reference signal types listed above, and the aforementioned reference signal types do not limit the scope of the present disclosure.

It should be understood that the second DCI signaling may be a DCI signaling that is transmitted firstly after the first DCI signaling is transmitted. A time interval between the first DCI signaling and the second DCI signaling is sufficient for the user equipment to complete the HARQ feedback to the network device, that is, the time interval is sufficient for the user equipment to decode the received first DCI signaling and feed the HARQ back to the network device.

In embodiments of the present disclosure, the first indication information of the target unified beam is transmitted to the UE by the network device, so that after receiving the first indication information of the target unified beam transmitted by the network device, the UE communicates with the network device using the target unified beam on at least two channels, or at least two reference signals, or at least one reference signal and at least one channel. Through just once communication of the first indication information of the target unified beam, the target unified beam can be used for multiple types of communication including the reference signal communication and the channel communication, so that separate beam indications for each channel communication or reference signal communication are avoided, thereby saving the signaling overheads.

FIG. 5 is a schematic flowchart of another beam indication method provided by embodiments of the present disclosure, and the method is executed by a UE.

Embodiments of the present disclosure provide a possible carrying manner of the first indication information of the target unified beam. As shown in FIG. 5, the method includes the following steps.

In step 501, a first DCI signaling transmitted by a network device is received.

Regarding the illustrations of the user equipment and the network device, reference may be made to the explanations and descriptions in any of the foregoing embodiments, which will not be elaborated in embodiments here.

The first DCI signaling includes first indication information, and carries resource configuration information for configuring a communication resource for at least one of a reference signal, a PRACH, a PUSCH, a PUCCH or a PDSCH.

As a possible implementation, the first DCI signaling carries resource configuration information of a communication resource for downlink communication, and the first DCI signaling is a DCI signaling used for downlink resource scheduling. The first DCI signaling may adopt a preset DCI signaling, such as a DCI format 1_0, 1_1 or 1_2, a redefined DCI signaling, or other DCI signaling, which will not be listed one by one in embodiments of the present disclosure, and embodiments of the present disclosure are not limited to thereto.

As another possible implementation, the first DCI signaling carries resource configuration information of a communication resource for uplink communication, and the first DCI signaling is a DCI signaling used for uplink resource scheduling. The first DCI signaling may adopt a preset DCI signaling, such as a DCI format 0_0, 0_1 or 0_2, a redefined DCI signaling, or other DCI signaling, which will not be listed one by one in embodiments of the present disclosure, and embodiments of the present disclosure are not limited to thereto.

As a third possible implementation, the first DCI signaling carries resource configuration information of communication resources for uplink and downlink communication, and the first DCI signaling is a DCI signaling used for uplink and downlink resource scheduling.

The first DCI signaling may be a DCI signaling for resource configuration for a single TRP or multiple TRPs, which is not limited in embodiments of the present disclosure.

In step 502, second HARQ feedback information is transmitted to the network device.

In embodiments of the present disclosure, in a case where an HARQ feedback resource is configured, the second HARQ feedback information is transmitted to the network device.

The UE may adopt a same beam as that used for transmitting the first DCI signaling to transmit the second HARQ feedback information to the network device, or adopt a target unified beam indicated by the first indication information included in the first DCI signaling to transmit the second HARQ feedback information to the network device, which is not limited in embodiments of the present disclosure.

As a possible implementation, if the network device schedules two HARQ feedback resources through the first DCI signaling, or the UE is pre-configured with two HARQ feedback resources, the second HARQ feedback information includes: first feedback information configured to feed back whether the first DCI signaling is successfully received, and second feedback information configured to feed back whether the PDSCH or a downlink reference signal configured by the first DCI signaling is successfully received.

As another possible implementation, if the network device schedules an HARQ feedback resource through the first DCI signaling, or the UE is pre-configured with an HARQ feedback resource, the second HARQ feedback information includes: first feedback information and second feedback information, which share the HARQ feedback resource.

In an implementation of embodiments of the present disclosure, HARQ feedback resources used for transmitting the first feedback information and/or the second feedback information are configured by the first DCI signaling, or are default.

In an implementation of embodiments of the present disclosure, the HARQ feedback resources used for transmitting the first feedback information and/or the second feedback information are the same HARQ feedback resources or different HARQ feedback resources.

In an example, when the HARQ feedback resources used for transmitting the first feedback information and/or the second feedback information are the same HARQ feedback resources, the first feedback information and/or the second feedback information correspond to the same or different bits in the same HARQ feedback resource.

In a possible scenario, the first DCI signaling may be transmitted by the network device for one time, and correspondingly, there may be one or more candidate PUCCH/PUSCH resources for the UE to transmit the second HARQ feedback information.

In another possible scenario, the first DCI signaling may be transmitted by the network device for multiple times, and correspondingly, there may be one or more candidate PUCCH/PUSCH resources for the UE to transmit the second HARQ feedback information. Optionally, the UE transmits the second HARQ feedback information every time it receives the first DCI signaling. Alternatively, the network device repeatedly transmits the first DCI signaling at N transmitting times, respectively, and correspondingly, the UE is configured with L candidate PUCCH/PUSCH resources for transmitting the first HARQ feedback information, where L is less than or equal to N, some of the L candidate PUCCH/PUSCH resources are before the end of the N transmitting times, and some are after the end of the N transmitting times. In a case where the UE correctly receives the first DCI signaling before the N transmitting times, the UE may select a candidate PUCCH/PUSCH resource to transmit the second HARQ feedback information before the N transmitting times. In a case where the UE correctly receives the first DCI signaling at or after the end of the N transmitting times, the UE may select a candidate PUCCH/PUSCH resource to transmit the second HARQ feedback information after the end of the N transmitting times. Alternatively, the network device repeatedly transmits the first DCI signaling at N transmitting times, respectively, and correspondingly, the UE is configured with one candidate PUCCH/PUSCH resource for transmitting the first HARQ feedback information, and the UE may transmit the second HARQ feedback information after the end of the N transmitting times.

In an example of embodiments of the present disclosure, a transmitting beam for transmitting the second HARQ feedback information is a transmitting beam corresponding to a target unified beam corresponding to the target unified TCI state index or index combination in the first DCI signaling.

In an example of embodiments of the present disclosure, a transmitting beam for transmitting the second HARQ feedback information is a transmitting beam corresponding to a receiving beam for receiving the first DCI signaling.

In step 503, communication with the network device is performed using the communication resource configured according to the resource configuration information carried in the first DCI signaling.

In embodiments of the present disclosure, in a case where an HARQ feedback indicating whether the first DCI signaling is successfully received is not transmitted separately, the network device determines whether the UE has correctly received the first DCI signaling, i.e., whether the network device has completed the configuration, according to whether the UE uses the configured communication resource to communicate with the network device.

In an implementation of embodiments of the present disclosure, in a case where a time interval between the communication of the user equipment and the reception of the first DCI signaling is less than a threshold, the communication adopts a same beam as the first DCI signaling.

In another implementation of embodiments of the present disclosure, in a case where the time interval between the communication of the user equipment and the reception of the first DCI signaling is greater than or equal to the threshold, the communication adopts a target unified beam corresponding to the target unified TCI state index in the first DCI signaling.

In embodiments of the present disclosure, the threshold in the step 503 is default to be set in the UE. As a possible implementation, the threshold may be notified by the network device. As another possible implementation, the threshold may be determined according to historical communication time, which is not limited in embodiments of the present disclosure.

In an example, the threshold is notified by the network device.

As a possible implementation, the user equipment transmits a reference time to the network device, and the reference time is configured to be used by the network device to determine the threshold. The reference time includes a time for decoding the first DCI signaling, a time for an HARQ feedback corresponding to the first DCI signaling, and a time for beam switch; or the reference time includes the time for the HARQ feedback corresponding to the first DCI signaling and the time for the beam switch. Therefore, the user equipment determines that the decoding of the first DCI signaling, the HARQ feedback and the beam switch can be completed within the reference time, or the HARQ feedback and the beam switch can be completed within the reference time.

As a possible implementation, the threshold determined by the network device is greater than or equal to the reference time.

In embodiments of the present disclosure, detailed descriptions are made with reference to an example where the communication includes transmission of uplink communication from the user equipment to the network device and/or reception of downlink communication by the user equipment.

In embodiments of the present disclosure, in the case where an HARQ feedback resource indicating whether the first DCI signaling is successfully received is not separately configured, the network device determines whether the UE has correctly received the first DCI signaling according to whether the UE uses the configured communication resource to transmit the uplink communication to the network device; or the network device uses the configured communication resource to transmit downlink communication to the user equipment, and determines whether the UE has correctly received and decoded the first DCI signaling according to HARQ feedback information which is fed back by the UE and indicates whether the UE has correctly received and decoded the downlink communication.

It should be noted that, in a case where a time interval between uplink communication and/or downlink communication and the first DCI signaling is less than the threshold, the uplink communication and/or the downlink communication adopt a same beam as the first DCI signaling. In a case where a time interval between uplink communication and/or downlink communication and the first DCI signaling is greater than or equal to the threshold, the uplink communication and/or the downlink communication adopt a same beam as a target unified beam corresponding to the target unified TCI state index or index combination in the first DCI signaling. The threshold is at least one of a time required by the UE to decode the first DCI signaling, a time required by the UE to feed back to the network device whether the first DCI signaling is correctly received, or a time for beam switch. The time threshold may be determined through negotiation between the UE and the network device.

After the network device determines that the UE has correctly received the first DCI signaling, in the subsequent communication between the UE and the network device, the UE can use the target unified beam to perform the at least two types of communication with the network device, so as to use the target unified beam to perform the uplink communication and/or the downlink communication with the network device.

In step 504, at least two types of communication with the network device are performed using the target unified beam.

A time is counted starting from a moment when the first DCI signaling is received, and the at least two types of communication are performed when it is determined that the time counted reaches the aforementioned threshold, that is, communication of a channel and/or a reference signal in the at least two types of communication is performed with the network device using the target unified beam, thereby saving the signaling overheads.

In embodiments of the present disclosure, the step 503 may be implemented using any implementation as described in various embodiments of the present disclosure, which is not limited in embodiments of the present disclosure here, and will not be elaborated here.

In embodiments of the present disclosure, the first indication information of the target unified beam is transmitted to the UE by the network device, so that after receiving the first indication information of the target unified beam transmitted by the network device, the UE communicates with the network device using the target unified beam on at least two channels, or at least two reference signals, or at least one reference signal and at least one channel. Through just once communication of the first indication information of the target unified beam, the target unified beam can be used for multiple types of communication including the reference signal communication and the channel communication, so that separate beam indications for each channel communication or reference signal communication are avoided, thereby saving the signaling overheads.

Embodiments of the present disclosure provide a possible beam indication and switching manner. In embodiments of the present disclosure, as a possible implementation, the user equipment may also receive third indication information transmitted by the network device, and the third indication information is configured to indicate the UE to adopt the target unified beam or a dedicated beam to perform the at least two types of communication.

In an implementation, the third indication information received by the user equipment may be received before the user equipment receives the first indication information, so that the user equipment determines to use the target unified beam or to use the dedicated beam to perform the at least two types of communication according to the third indication information. In an example, if it is determined to use the dedicated beam to perform the at least two types of communication, the at least two types of communication are performed according to the indicated dedicated beam. A signaling for indicating a dedicated beam for each communication is a different signaling. In another example, if it is determined to use the target unified beam to perform at least two types of communication, the target unified beam to be used for communication is further determined according to the obtained first indication information. For details, reference may be made to any implementation as described in any embodiment above, which will not be elaborated in embodiments of the present disclosure here.

In another implementation, the third indication information received by the user equipment may be received after the user equipment receives the first indication information, and further, the network device determines that the target unified beam needs to be switched to a dedicated beam according to the received third indication information, and the dedicated beam needs to be indicated independently through separate transmission of a signaling for each channel and/or each reference signal. In a possible application scenario, the network device needs to switch a certain channel or reference signal to a dedicated beam, so that only indication information of the dedicated beam corresponding to the channel or reference signal may be transmitted, while other channels or reference signals not receiving the indication information of the dedicated beam will continue to use the target unified beam. In another possible application scenario, the network device may switch each channel and/or each reference signal currently using the target unified beam to a dedicated beam, and send the indication information of the dedicated beam for each channel and/or reference signal, respectively.

FIG. 6 is a schematic flowchart of a beam indication method provided by embodiments of the present disclosure, which is applied to a network device.

As shown in FIG. 6, the method includes the following steps.

In step 601, first indication information is transmitted to a user equipment UE. The first indication information is configured to indicate a target unified beam to enable the UE to perform at least two types of communication with the network device using the target unified beam, and the communication includes communication of a channel and/or a reference signal.

The beam indication method according to embodiments of the present disclosure may be applied to any network device. The network device is deployed in a wireless access network to provide a wireless access function for the user equipment. The network device may be a base station (BS). The network device may wirelessly communicate with the user equipment via one or more antennas. The network device can provide communication coverage for a geographic area where it is located. The base station may include different types, such as a macro base station, a micro base station, a relay station, and an access point. In some embodiments, the base station may be referred to by those skilled in the art as a base station transceiver, a wireless base station, an access point, a wireless transceiver, a basic service set (BSS), an extended service set (ESS), a NodeB, an evolved NodeB (eNB or eNodeB) or other appropriate term. For example, in a 5G system, the base station is called as gNB. For convenience of description, in embodiments of the present disclosure, the foregoing apparatuses for providing the wireless communication function for the user equipment are collectively referred to as the network device.

User equipment may be distributed throughout a mobile communication system, and each user equipment may be stationary or mobile. The user equipment may also be referred to by those skilled in the art as a mobile station, a subscriber station, a mobile unit, a subscriber unit, a wireless unit, a remote unit, a mobile device, a terminal device, a wireless device, a wireless communication device, a remote device, a mobile subscriber station, an access user equipment, a mobile user equipment, a wireless user equipment, a remote user equipment, a handheld device, a user agent, a mobile client, a client, or some other appropriate term. The user equipment may be a cellular phone, a personal digital assistant (PDA), a wireless modem, a wireless communication device, a handheld device, a tablet computer, a laptop computer, a cordless phone, a wireless local loop (WLL) stations, or the like that can communicate with the network device in the mobile communication system.

The first indication information may be carried in a control signaling, such as a radio resource control (RRC) signaling, a control element (CE) signaling of a medium access control (MAC) layer, abbreviated as an MAC CE signaling, a downlink control information (DCI) signaling, or a combination of at least two of these signalings. In embodiments of the present disclosure, the bearing manner of the first indication information of the target unified beam is not limited.

As an example, the channel includes at least one of or any combination of the following channels:
a physical downlink control channel, PDCCH;
a physical downlink shared channel, PDSCH;
a physical uplink control channel, PUCCH;
a physical uplink shared channel, PUSCH;
a physical broadcast channel, PBCH; or
a physical random access channel, PRACH.

As an example, the reference signal includes at least one of or any combination of the following signals:
a channel state information-reference signal, CSI-RS;
a synchronization signal and PBCH block, SSB;
a demodulation reference signal, DMRS;
a positioning reference signal, PRS;
a tracking reference signal, TRS; or
a sounding reference signal, SRS.

The above-mentioned reference signals can be used in different scenarios, for example, beam measurement, channel state information measurement, path loss estimation, antenna switching, positioning measurement, channel estimation or synchronization tracking during demodulation, etc., which will not be listed one by one in embodiments of the present disclosure. Furthermore, the channels and reference signals listed above are only examples, and do not limit the present disclosure.

In embodiments of the present disclosure, the target unified beam is applied to the communication between the user equipment and the network device. According to the direction of the communication, the at least two types of communication may include channels and/or reference signals that belong to uplink communication; channels and/or reference signals that belong to downlink communication; or channels and/or reference signals some of which are used for the uplink communication, and some of which are used for the downlink communication. In the following, several possible implementations are described respectively.

As a first possible implementation, the target unified beam may be used for communication of at least two channels. For example, the target unified beam may be used for the PDSCH channel and the PDCCH channel, where the PDSCH channel includes all PDSCH channels or only includes a part of PDSCH channels, such as UE dedicated PDSCH channels; and the PDCCH channel includes all PDCCH channels or only includes a part of PDCCH channels, such as UE dedicated PDCCH channels. Alternatively, for another example, the target unified beam may be used for the PUSCH channel and the PUCCH channel, where the PUSCH channel includes all PUSCH channels or only includes a part of PUSCH channels, such as UE dedicated PUSCH channels, and the PUCCH channel includes all PUCCH channels or only includes a part of PUCCH channels, such as UE dedicated PUCCH channels. For another example, the target unified beam may be used for the PUSCH channel and the PDSCH channel, where the PUSCH channel includes all PUSCH channels or only includes a part of PUSCH channels, such as UE dedicated PUSCH channels, and the PDSCH channel includes all PDSCH channels or only includes a part of PDSCH channels, such as UE dedicated PDSCH channels. In a case where the target unified beam is used for the PDSCH channel and the PDCCH channel, the target unified beam may be called a downlink target unified beam (DL unified beam). In a case where the target unified beam is used for the PUSCH channel and the PUCCH channel, the target unified beam may be called an uplink target unified beam (UI unified beam). In a case where the target unified beam is used for the PUSCH channel and the PDSCH channel, the target unified beam is called a unified beam, that is, it can be used for both the uplink channel and the downlink channel.

As a second possible implementation, the target unified beam may be used for communication of at least two reference signals. The at least two reference signals used herein may each belong to a downlink reference signal, or may each belong to an uplink reference signal, or may be a hybrid of the downlink reference signal and the uplink reference signal, which is not limited in embodiments of the present disclosure. For example, the downlink reference signal may include at least one of an SSB, a CSI-RS, a PRS, a TRS, or a DMRS. Alternatively, for another example, the uplink reference signal may include at least one of an SRS or a DMRS. For some reference signals, such as the CSI-RS, the reference signal may include all CSI-RSs; or instead of all CSI-RSs, the reference signal may include one or more CSI-RSs for at least one purpose, such as for at least one of channel state information measurement, beam measurement, path loss estimation, or positioning measurement. For another example, the SRS may include all SRSs; or instead of all SRSs, the SRS may include one or more SRSs for at least one purpose, such as for at least one of codebook based channel state information measurement, non-codebook based channel state information measurement, beam measurement, antenna switching, or positioning measurement.

As a third possible implementation, the target unified beam may be used for communication of at least one reference signal and at least one channel. For example, the target unified beam may be used for communication of the PDSCH channel and the downlink reference signal, and the downlink reference signal may include at least one of an SSB, a CSI-RS, a PRS, a TRS, or a DMRS. Alternatively, for another example, the target unified beam may be used for communication of the PUSCH and the uplink reference signal, and the uplink reference signal may include at least one of an SRS or a DMRS. Similarly, the PDSCH here may include all PDSCHs, or only includes a part of PDSCHs, such as UE dedicated PDSCHs; the PUSCH here may include all PUSCHs, or only includes a part of PUSCHs, such as UE dedicated PUSCHs; and the reference signal here, such as the CSI-RS or the SRS, may include CSI-RS(s) or SRS(s) for all purposes or for at least one purpose.

It should be noted that the downlink channels, the uplink channels, the downlink reference signals and the uplink reference signals mentioned above are only used for illustration, and specific implementations are not limited to these several types of channels or reference signals listed above, which cannot be construed to limit the scope of the present disclosure.

In a possible implementation of embodiments of the present disclosure, the first indication information further includes indication information of the at least two types of communication. That is, the indication information indicates specific types of the at least two types of communication determined for the user equipment to perform the communication with the network device using the target unified beam. For example, the indication information indicates that the communication to be performed between the user equipment and the network device using the target unified beam is PDSCH channel communication and PDCCH channel communication. Further, implementations of the at least two types of communication have been described above, which will not be elaborated here.

In embodiments of the present disclosure, the target unified beam may be a single beam or may include multiple beams, which is not limited in embodiments of the present disclosure.

In a case where the target unified beam includes multiple beams, a respective target unified beam corresponding to each TRP or a respective target unified beam corresponding to each coreset pool index needs to be determined according to the first indication information transmitted by the network device, so that a target TCI state index in the first indication information should correspond to a TRP index or a coreset pool index.

In embodiments of the present disclosure, the first indication information is transmitted to the UE by the network device, so that after receiving the first indication information transmitted by the network device, the UE communicates with the network device using the target unified beam on at least two channels, or at least two reference signals, or at least one reference signal and at least one channel. Through just once communication of the first indication information of the target unified beam, the target unified beam can be used for multiple types of communication including the reference signal communication and the channel communication, so that separate beam indications for each channel communication or reference signal communication are avoided, thereby saving the signaling overheads.

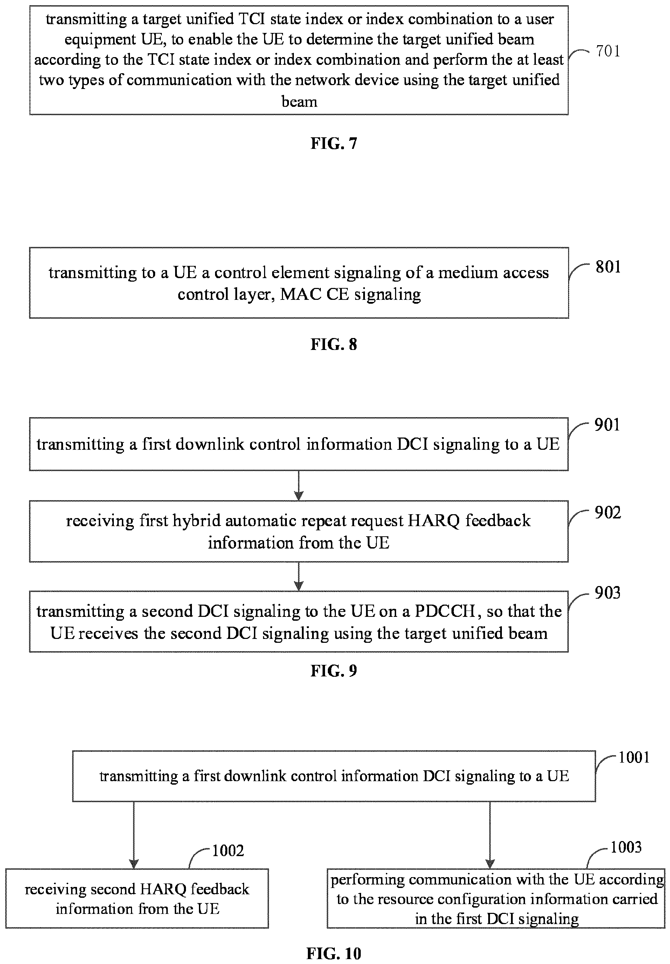

FIG. 7 is a schematic flowchart of another beam indication method provided by embodiments of the present disclosure, which is applied to a user equipment.

Based on the beam indication method provided in FIG. 7, an indication manner of the target unified beam is illustrated. As shown in FIG. 7, the method includes the following steps.

In step 701, a target unified TCI state index or index combination is transmitted to a user equipment UE, to enable the UE to determine the target unified beam according to the TCI state index or index combination and perform the at least two types of communication with the network device using the target unified beam.

Regarding the illustrations of the user equipment and the network device, reference may be made to the explanations and descriptions in any of the foregoing embodiments, which will not be elaborated in embodiments here.

In embodiments of the present disclosure, the first indication information received by the user equipment includes the target unified transmission configuration indicator TCI state index or index combination transmitted by the network device. The target unified TCI state index combination may be determined by a combination identifier. For example, 01 and 02 indicate different index combinations, respectively. Alternatively, different index combinations may be indicated by different code points. For example, 3-bit code points 000 and 001 indicate different index combinations, respectively. One or more TCI state indexes are included in different index combinations. There may be one or more target unified transmission configuration indicator TCI state indexes. Each target unified TCI state index corresponds to one or more reference signals (RSs), and each reference signal is used to indicate at least one of the uplink target unified beam and the downlink target unified beam.

In embodiments of the present disclosure, the target unified TCI state index includes at least one of a downlink target unified TCI state index, an uplink target unified TCI state index, or an uplink and downlink target unified TCI state index.

It should be understood that a reference signal corresponding to the downlink target unified TCI state index, such as an RS, is not used to indicate a target unified beam of an uplink channel or an uplink reference signal; and a reference signal corresponding to the uplink target unified TCI state index, such as an RS, is not used to indicate a target unified beam of a downlink channel or a downlink reference signal. One or more reference signals corresponding to the uplink and downlink target unified TCI state index, such as one or more RSs, may indicate a target unified beam of uplink communication or a target unified beam of downlink communication at the same time. For example, the target unified beam of the uplink communication and the target unified beam of the downlink communication may be indicated by one reference signal (RS), or may be indicated by one reference signal (RSs), respectively.

As an implementation, the network device configures a correspondence between target unified TCI state indexes and reference signals (RSs) for the UE through a radio resource control (RRC) signaling. After acquiring the target TCI state index, the UE queries the above correspondence between TCI state indexes and RSs according to the target TCI state index to obtain a reference signal RS corresponding to the target TCI state index. Correspondingly, the UE determines a corresponding beam according to the reference signal RS. Optionally, the correspondence between TCI state indexes and RSs may be a TCI table or in other forms, and the correspondence in the form of a TCI table is used as an example for illustration. The TCI table may include TCI state indexes (i.e., TCI state IDs), reference signal indexes (RS IDs) and the like information.

It should be noted that, when what acquired is the target unified TCI state index combination, multiple target unified TCI state indexes included therein are determined according to a mapping relationship between identifiers of index combinations or bit-displayed codepoints and the index combinations, and a corresponding target unified beam is determined according to the pre-configured correspondence between TCI state indexes and RSs.

As a possible implementation, the TCI state index transmitted by the network device may indicate one of the uplink target unified beam or the downlink target unified beam. That is, the uplink target unified TCI state index is used to indicate the uplink target unified beam, and the downlink target unified TCI state index is used to indicate the downlink target unified beam.

As another possible implementation, the target unified TCI state index transmitted by the network device may be used to indicate the uplink target unified beam and the downlink target unified beam. As an implementation, the target unified TCI state index transmitted by the network device indicates a corresponding RS for each TRP, that is, the RS indicates both the uplink target unified beam and the downlink target unified beam. As another implementation, the target unified TCI state index transmitted by the network device indicates a corresponding RS for each TRP, and this RS may indicate the uplink target unified beam or the downlink target unified beam. As yet another implementation, the target unified TCI state index transmitted by the network device indicates two corresponding RSs for each TRP, one of the two RSs is used to indicate the uplink target unified beam, and the other one of the two RSs is used to indicate the downlink target unified beam.

It should be noted that, the target unified TCI state index corresponds to one transmission and reception point TRP index or one coreset pool index. That is, the target unified TCI state index is universal for multiple communication with the one TRP, while different TRPs use different target unified TCI state indexes; and the target unified TCI state index is universal for multiple communication with the one coreset pool index, while different coreset pool indexes use different target unified TCI state indexes.

It should be understood that, in an embodiment, in a case of one TRP, the determined unified beam is the beam corresponding to the TRP. In another embodiment, in a case of multiple TRPs, different TRPs have respective target unified TCI state indexes, and the target unified TCI state index has a corresponding RS, so that the target unified beam corresponding to the respective TPR can be determined.

Further, the UE determines the target unified beam according to the target unified TCI state index or index combination and performs the at least two types of communication with the network device using the target unified beam.

In embodiments of the present disclosure, the network device may pre-configure the correspondence between target unified TCI state indexes and RSs for the UE through a higher-layer signaling, such as a radio resource control (RRC) signaling or a control element signaling of a medium access control layer (MAC CE). According to the pre-configured correspondence, the UE may determine a corresponding unified beam according to a target unified TCI state index dynamically indicated by the network device.

In embodiments of the present disclosure, the user equipment uses the determined target unified beam to perform the at least two types of communication. The communication includes communication of a channel and/or a reference signal. The communication may be implemented using any implementation as described in various embodiments of the present disclosure, which is not limited in embodiments of the present disclosure here, and will not be elaborated here.

In embodiments of the present disclosure, the first indication information of the target unified beam is transmitted to the UE by the network device, so that after receiving the first indication information of the target unified beam transmitted by the network device, the UE communicates with the network device using the target unified beam on at least two channels, or at least two reference signals, or at least one reference signal and at least one channel. Through just once communication of the first indication information of the target unified beam, the target unified beam can be used for multiple types of communication including the reference signal communication and the channel communication, so that separate beam indications for each channel communication or reference signal communication are avoided, thereby saving the signaling overheads.

FIG. 8 is a schematic flowchart of another beam indication method provided by embodiments of the present disclosure, which is applied to a network device.

Embodiments of the present disclosure provide a possible carrying manner of the first indication information of the target unified beam. As shown in FIG. 8, the method includes the following steps.

In step 801, a control element signaling of a medium access control layer, MAC CE signaling, is transmitted to a UE.

Regarding the illustrations of the user equipment and the network device, reference may be made to the explanations and descriptions in any of the foregoing embodiments, which will not be elaborated in embodiments here.

The MAC CE signaling carries second indication information for activating one or more TCI state indexes, and one TCI state index corresponds to one TRP index or one coreset pool index.

The MAC CE signaling includes an indication bit, and the indication bit records the second indication information for activating one or more TCI state indexes. That is, the second indication information indicates the one or more TCI state indexes to be activated.

Optionally, the MAC CE has a corresponding indication bit for each TCI state index, so that the UE determines a corresponding TCI state index according to the second indication information in the indication bit, and one TCI state index corresponds to one TRP index or one coreset pool index.

It should be noted that the beam includes an uplink beam, a downlink beam, and an uplink and downlink unified beam, and one or more beams may be activated for each TRP. The one or more beams activated may include at least one uplink beam, and/or at least one downlink beam, or at least one uplink and downlink unified beam. In embodiments of the present disclosure, the number of activated beams is not limited.

Further, the UE determines the first indication information according to the one or more TCI state indexes activated by the second indication information.

In embodiments of the present disclosure, one TCI state index corresponds to one TRP index or one coreset pool index.

In a possible scenario, one TCI state index is activated by the second indication information for one TRP index or one coreset pool index, so that the one TCI state index activated by the second indication information is determined as the first indication information. For example, one TCI state index is activated for one TRP, so a TCI state index corresponding to the TRP is the activated TCI state index. In an example, the activated TCI state index corresponds to a downlink target unified TCI state index, then a reference signal corresponding to the activated TCI state index indicates a downlink target unified beam, and the downlink target unified beam of the TRP is the downlink beam indicated by the reference signal corresponding to the TCI state index. In another example, the activated TCI state index corresponds to an uplink target unified TCI state index, then a reference signal corresponding to the activated TCI state index indicates an uplink target unified beam, and the uplink target unified beam of the TRP is the uplink beam indicated by the reference signal corresponding to the TCI state index. In another example, the activated TCI state index corresponds to a target unified TCI state index, then a reference signal corresponding to the activated TCI state index indicates an uplink target unified beam and a downlink target unified beam, and the uplink target unified beam and the downlink target unified beam of the TRP are the uplink beam and the downlink beam indicated by the reference signal corresponding to the TCI state index.

In another possible scenario, multiple TCI state indexes are activated by the second indication information for one TRP index or one coreset pool index, so that it needs to determine a target TCI state index or index combination corresponding to the respective TRP index or coreset pool index from the multiple TCI state indexes as the first indication information. As an implementation, a first downlink control information DCI signaling is received from the network device. The first DCI signaling carries the first indication information, and the first indication information includes one target unified TCI state index or index combination among the multiple TCI state indexes activated by the second indication information.

It should be noted that the index combination includes multiple unified TCI state indexes, and different TCI state indexes correspond to different TRPs or different coreset pool indexes.

In embodiments of the present disclosure, the user equipment adopts the determined target unified beam to perform at least two types of communication, which may be implemented using any implementation as described in various embodiments of the present disclosure, and is not limited in embodiments of the present disclosure here, so will not be elaborated here. The communication includes communication of a channel and/or a reference signal.

In embodiments of the present disclosure, the first indication information of the target unified beam is transmitted to the UE by the network device, so that after receiving the first indication information of the target unified beam transmitted by the network device, the UE communicates with the network device using the target unified beam on at least two channels, or at least two reference signals, or at least one reference signal and at least one channel. Through just once communication of the first indication information of the target unified beam, the target unified beam can be used for multiple types of communication including the reference signal communication and the channel communication, so that separate beam indications for each channel communication or reference signal communication are avoided, thereby saving the signaling overheads.

FIG. 9 is a schematic flowchart of another beam indication method provided by embodiments of the present disclosure, and the method is executed by a network device.

Embodiments of the present disclosure provide a possible carrying manner of the first indication information of the target unified beam. As shown in FIG. 9, the method includes the following steps.

In step 901, a first downlink control information DCI signaling is transmitted to a UE.

Regarding the illustrations of the user equipment and the network device, reference may be made to the explanations and descriptions in any of the foregoing embodiments, which will not be elaborated in embodiments here.

The first DCI signaling includes first indication information of a target unified beam. That is, the target unified TCI state index or index combination and the resource configuration information are in different DCI signalings, and what included in the first DCI signaling is the target unified TCI state index or index combination, i.e., the first indication information.

The first DCI signaling may be based on a single TRP or based on multiple TRPs, which is not limited in embodiments of the present disclosure.

In a possible implementation of embodiments of the present disclosure, the UE uses one or more receiving beams to receive one or more transmissions of the first DCI signaling, that is, the network device uses one or more TRPs to perform one or more transmissions of the first DCI signaling, and each TRP corresponds to a different beam, which avoids the block of signal communication and improves the communication quality, so as to ensure that the first DCI signaling can be received.

In step 902, first hybrid automatic repeat request HARQ feedback information is received from the UE.

The first HARQ feedback information is used to indicate to the network device whether the first DCI signaling is successfully received.

An HARQ feedback resource used by the UE for transmitting the first HARQ feedback information is configured by the first DCI signaling or is default.

In a possible scenario, the first DCI signaling may be transmitted by the network device for one time, and correspondingly, there may be one or more candidate PUCCH/PUSCH resources for the UE to transmit the first HARQ feedback information.

In another possible scenario, the first DCI signaling may be transmitted by the network device for multiple times, and correspondingly, there may be one or more candidate PUCCH/PUSCH resources for the UE to transmit the first HARQ feedback information.

Optionally, the UE transmits the first HARQ feedback information every time it receives the first DCI signaling.

Alternatively, the network device repeatedly transmits the first DCI signaling at N transmitting times, respectively, and correspondingly, the UE is configured with L candidate PUCCH/PUSCH resources for transmitting the first HARQ feedback information, where L is less than or equal to N, some of the L candidate PUCCH/PUSCH resources are before the end of the N transmitting times, and some are after the end of the N transmitting times. In a case where the UE correctly receives the first DCI signaling before the N transmitting times, the UE may select a candidate PUCCH/PUSCH resource to transmit the first HARQ feedback information before the N transmitting times. In a case where the UE correctly receives the first DCI signaling at or after the end of the N transmitting times, the UE may select another candidate PUCCH/PUSCH resource to transmit the first HARQ feedback information after the end of the N transmitting times.

Alternatively, the network device repeatedly transmits the first DCI signaling at N transmitting times, respectively, and correspondingly, the UE is configured with one candidate PUCCH/PUSCH resource for transmitting the first HARQ feedback information, and the UE may transmit the first HARQ feedback information after the end of the N transmitting times.

Further, during subsequent communication of the UE with the network device, the UE uses the target unified beam to perform at least two types of communication with the network device. The communication includes communication of a channel and/or a reference signal.

In an example of embodiments of the present disclosure, a transmitting beam for transmitting the first HARQ feedback information is a transmitting beam corresponding to a target unified beam corresponding to the target unified TCI state index or index combination in the first DCI signaling.

In another example of embodiments of the present disclosure, a transmitting beam for transmitting the first HARQ feedback information is a transmitting beam corresponding to a receiving beam for receiving the first DCI signaling.

In step 903, a second DCI signaling is transmitted to the UE on a PDCCH, so that the UE receives the second DCI signaling using the target unified beam.

In embodiments of the present disclosure, for convenience of description, a DCI signaling carrying communication resource configuration information is referred to as the second DCI signaling.

The second DCI signaling carries resource configuration information for configuring a communication resource for a reference signal, a physical random access channel PRACH, a physical uplink shared channel PUSCH, a physical uplink control channel PUCCH and/or a physical downlink shared channel PDSCH.

The configured reference signal may specifically include at least one of the following reference signals:
a channel state information-reference signal, CSI-RS;
a synchronization signal and PBCH block, SSB;
a demodulation reference signal, DMRS;
a positioning reference signal, PRS;
a tracking reference signal, TRS; or
a sounding reference signal, SRS.

The above-mentioned reference signals can be used in different scenarios, for example, beam measurement, channel state information measurement, path loss estimation, antenna switching, positioning measurement, channel estimation or synchronization tracking during demodulation, etc., which will not be listed one by one in embodiments of the present disclosure. In specific implementations, it is not limited to the several reference signal types listed above, and the aforementioned reference signal types do not limit the scope of the present disclosure.

It should be understood that the second DCI signaling may be a DCI signaling that is transmitted firstly after the first DCI signaling is transmitted. A time interval between the first DCI signaling and the second DCI signaling is sufficient for the user equipment to complete the HARQ feedback to the network device, that is, the time interval is sufficient for the user equipment to decode the received first DCI signaling and feed the HARQ back to the network device.

In embodiments of the present disclosure, the first indication information of the target unified beam is transmitted to the UE by the network device, so that after receiving the first indication information of the target unified beam transmitted by the network device, the UE communicates with the network device using the target unified beam on at least two channels, or at least two reference signals, or at least one reference signal and at least one channel. Through just once communication of the first indication information of the target unified beam, the target unified beam can be used for multiple types of communication including the reference signal communication and the channel communication, so that separate beam indications for each channel communication or reference signal communication are avoided, thereby saving the signaling overheads.

FIG. 10 is a schematic flowchart of another beam indication method provided by embodiments of the present disclosure, and the method is executed by a network device.

Embodiments of the present disclosure provide a possible carrying manner of the first indication information of the target unified beam. As shown in FIG. 10, the method includes the following steps.

In step 1001, a first downlink control information DCI signaling is transmitted to a UE.

Regarding the illustrations of the user equipment and the network device, reference may be made to the explanations and descriptions in any of the foregoing embodiments, which will not be elaborated in embodiments here.

In embodiments of the present disclosure, the first DCI signaling includes first indication information, and carries resource configuration information for configuring a communication resource for at least one of a reference signal, a PRACH, a PUSCH, a PUCCH or a PDSCH.

As a possible implementation, the first DCI signaling carries resource configuration information of a communication resource for downlink communication, and the first DCI signaling is a DCI signaling used for downlink resource scheduling. The first DCI signaling may adopt a preset DCI signaling, such as a DCI format 1_0, 1_1 or 1_2, a redefined DCI signaling, or other DCI signaling, which will not be listed one by one in embodiments of the present disclosure, and embodiments of the present disclosure are not limited to thereto.

As another possible implementation, the first DCI signaling carries resource configuration information of a communication resource for uplink communication, and the first DCI signaling is a DCI signaling used for uplink resource scheduling. The first DCI signaling may adopt a preset DCI signaling, such as a DCI format 0_0, 0_1 or 0_2, a redefined DCI signaling, or other DCI signaling, which will not be listed one by one in embodiments of the present disclosure, and embodiments of the present disclosure are not limited to thereto.

As a third possible implementation, the first DCI signaling carries resource configuration information of communication resources for uplink and downlink communication, and the first DCI signaling is a DCI signaling used for uplink and downlink resource scheduling.

The first DCI signaling may be a DCI signaling for resource configuration for a single TRP or multiple TRPs, which is not limited in embodiments of the present disclosure.

In step 1002, second HARQ feedback information is received from the UE.

In embodiments of the present disclosure, in a case where an HARQ feedback resource is configured, the second HARQ feedback information is transmitted to the network device.

The UE may adopt a same beam as that used for transmitting the first DCI signaling to transmit the second HARQ feedback information to the network device, or adopt a target unified beam indicated by the first indication information included in the first DCI signaling to transmit the second HARQ feedback information to the network device, which is not limited in embodiments of the present disclosure.

As a possible implementation, if the network device schedules two HARQ feedback resources through the first DCI signaling, or the UE is pre-configured with two HARQ feedback resources, the second HARQ feedback information includes: first feedback information configured to feed back whether the first DCI signaling is successfully received, and second feedback information configured to feed back whether the PDSCH or a downlink reference signal configured by the first DCI signaling is successfully received.

As another possible implementation, if the network device schedules an HARQ feedback resource through the first DCI signaling, or the UE is pre-configured with an HARQ feedback resource, the second HARQ feedback information includes: first feedback information and second feedback information, which share the HARQ feedback resource.

In an implementation of embodiments of the present disclosure, HARQ feedback resources used for transmitting the first feedback information and/or the second feedback information are configured by the first DCI signaling, or are default.

In an implementation of embodiments of the present disclosure, the HARQ feedback resources used for transmitting the first feedback information and/or the second feedback information are the same HARQ feedback resources or different HARQ feedback resources.

In an example, when the HARQ feedback resources used for transmitting the first feedback information and/or the second feedback information are the same HARQ feedback resources, the first feedback information and/or the second feedback information correspond to the same or different bits in the same HARQ feedback resource.

In a possible scenario, the first DCI signaling may be transmitted by the network device for one time, and correspondingly, there may be one or more candidate PUCCH/PUSCH resources for the UE to transmit the second HARQ feedback information.

In another possible scenario, the first DCI signaling may be transmitted by the network device for multiple times, and correspondingly, there may be one or more candidate PUCCH/PUSCH resources for the UE to transmit the second HARQ feedback information. Optionally, the UE transmits the second HARQ feedback information every time it receives the first DCI signaling. Alternatively, the network device repeatedly transmits the first DCI signaling at N transmitting times, respectively, and correspondingly, the UE is configured with L candidate PUCCH/PUSCH resources for transmitting the first HARQ feedback information, where L is less than or equal to N, some of the L candidate PUCCH/PUSCH resources are before the end of the N transmitting times, and some are after the end of the N transmitting times. In a case where the UE correctly receives the first DCI signaling before the N transmitting times, the UE may select a candidate PUCCH/PUSCH resource to transmit the second HARQ feedback information before the N transmitting times. In a case where the UE correctly receives the first DCI signaling at or after the end of the N transmitting times, the UE may select a candidate PUCCH/PUSCH resource to transmit the second HARQ feedback information after the end of the N transmitting times. Alternatively, the network device repeatedly transmits the first DCI signaling at N transmitting times, respectively, and correspondingly, the UE is configured with one candidate PUCCH/PUSCH resource for transmitting the first HARQ feedback information, and the UE may transmit the second HARQ feedback information after the end of the N transmitting times.

In an example of embodiments of the present disclosure, a transmitting beam for transmitting the second HARQ feedback information is a transmitting beam corresponding to a target unified beam corresponding to the target unified TCI state index or index combination in the first DCI signaling.

In an example of embodiments of the present disclosure, a transmitting beam for transmitting the second HARQ feedback information is a transmitting beam corresponding to a receiving beam for receiving the first DCI signaling.

In step 1003, communication with the UE is performed according to the resource configuration information carried in the first DCI signaling.

In embodiments of the present disclosure, in a case where an HARQ feedback indicating whether the first DCI signaling is successfully received is not transmitted separately, the network device determines whether the UE has correctly received the first DCI signaling, i.e., whether the network device has completed the configuration, according to whether the UE uses the configured communication resource to communicate with the network device.

In an implementation of embodiments of the present disclosure, in a case where a time interval between the communication of the user equipment and the reception of the first DCI signaling is less than a threshold, the communication adopts a same beam as the first DCI signaling.

In another implementation of embodiments of the present disclosure, in a case where the time interval between the communication of the user equipment and the reception of the first DCI signaling is greater than or equal to the threshold, the communication adopts a target unified beam corresponding to the target unified TCI state index in the first DCI signaling.

In embodiments of the present disclosure, the threshold in the step 1003 is default to be set in the UE. As a possible implementation, the threshold may be determined by the network device. As another possible implementation, the threshold may be determined by the network device according to historical communication time, which is not limited in embodiments of the present disclosure.

As a possible implementation, the network device transmits threshold indication information to the UE according to a reference time transmitted by the UE. The reference time includes a time for decoding the first DCI signaling, a time for an HARQ feedback corresponding to the first DCI signaling, and a time for beam switch; or the reference time includes the time for the HARQ feedback corresponding to the first DCI signaling and the time for the beam switch. Therefore, the user equipment determines that the decoding of the first DCI signaling, the HARQ feedback and the beam switch can be completed within the reference time, or the HARQ feedback and the beam switch can be completed within the reference time.

As a possible implementation, the threshold determined by the network device is greater than or equal to the reference time.

In embodiments of the present disclosure, detailed descriptions are made with reference to an example where the communication includes transmission of uplink communication from the user equipment to the network device and/or reception of downlink communication by the user equipment.

In embodiments of the present disclosure, in the case where an HARQ feedback resource indicating whether the first DCI signaling is successfully received is not separately configured, the network device determines whether the UE has correctly received the first DCI signaling according to whether the UE uses the configured communication resource to transmit the uplink communication to the network device; or the network device uses the configured communication resource to transmit downlink communication to the user equipment, and determines whether the UE has correctly received and decoded the first DCI signaling according to HARQ feedback information which is fed back by the UE and indicates whether the UE has correctly received and decoded the downlink communication.

It should be noted that, in a case where a time interval between uplink communication and/or downlink communication and the first DCI signaling is less than the threshold, the uplink communication and/or the downlink communication adopt a same beam as the first DCI signaling. In a case where a time interval between uplink communication and/or downlink communication and the first DCI signaling is greater than or equal to the threshold, the uplink communication and/or the downlink communication adopt a same beam as a target unified beam corresponding to the target unified TCI state index or index combination in the first DCI signaling. The threshold is at least one of a time required by the UE to decode the first DCI signaling, a time required by the UE to feed back to the network device whether the first DCI signaling is correctly received, or a time for beam switch. The time threshold may be determined through negotiation between the UE and the network device.

After the network device determines that the UE has correctly received the first DCI signaling, in the subsequent communication between the UE and the network device, the UE can use the target unified beam to perform the at least two types of communication with the network device.

Further, a time is counted starting from a moment when the first DCI signaling is received, and the at least two types of communication are performed when it is determined that the time counted reaches the aforementioned threshold, that is, communication of a channel and/or a reference signal in the at least two types of communication is performed with the network device using the target unified beam, thereby saving the signaling overheads.

In embodiments of the present disclosure, regarding the implementation that the user equipment adopts the target unified beam to perform at least two types of communication with the network device, it is not limited in embodiments of the present disclosure here, and will not be elaborated here. The communication includes communication of a channel and/or a reference signal.

In embodiments of the present disclosure, the first indication information of the target unified beam is transmitted to the UE by the network device, so that after receiving the first indication information of the target unified beam transmitted by the network device, the UE communicates with the network device using the target unified beam on at least two channels, or at least two reference signals, or at least one reference signal and at least one channel. Through just once communication of the first indication information of the target unified beam, the target unified beam can be used for multiple types of communication including the reference signal communication and the channel communication, so that separate beam indications for each channel communication or reference signal communication are avoided, thereby saving the signaling overheads.

Embodiments of the present disclosure provide a possible beam indication and switching manner. In embodiments of the present disclosure, as a possible implementation, third indication information is transmitted to the UE, and the third indication information is configured to indicate the UE to adopt the target unified beam or a dedicated beam to perform the at least two types of communication.

In an implementation, the third indication information received by the user equipment may be received before the user equipment receives the first indication information, so that the user equipment determines to use the target unified beam or to use the dedicated beam to perform the at least two types of communication according to the third indication information. In an example, if it is determined to use the dedicated beam to perform the at least two types of communication, the at least two types of communication are performed according to the indicated dedicated beam. A signaling for indicating a dedicated beam for each communication is a different signaling. In another example, if it is determined to use the target unified beam to perform the at least two types of communication, the target unified beam to be used for communication is further determined according to the obtained first indication information. For details, reference may be made to any implementation as described in any embodiment above, which will not be elaborated in embodiments of the present disclosure here.

In another implementation, the third indication information received by the user equipment may be received after the user equipment receives the first indication information, and further, the network device determines that the target unified beam needs to be switched to a dedicated beam according to the received third indication information, and the dedicated beam needs to be indicated independently through separate transmission of a signaling for each channel and/or each reference signal. In a possible application scenario, the network device needs to switch a certain channel or reference signal to a dedicated beam, so that only indication information of the dedicated beam corresponding to the channel or reference signal may be transmitted, while other channels or reference signals not receiving the indication information of the dedicated beam will continue to use the target unified beam. In another possible application scenario, the network device may switch each channel and/or each reference signal currently using the target unified beam to a dedicated beam, and send the indication information of the dedicated beam for each channel and/or reference signal, respectively.

Corresponding to the information communication method provided by the above-mentioned embodiments, embodiments of the present disclosure also provide a beam indication apparatus. Since the beam indication apparatus provided in embodiments of the present disclosure corresponds to the beam indication method provided in the above-mentioned embodiments, the implementations of the beam indication method are also applicable to the beam indication apparatus provided in embodiments of the present disclosure here, which will not be elaborated in embodiments of the present disclosure here.

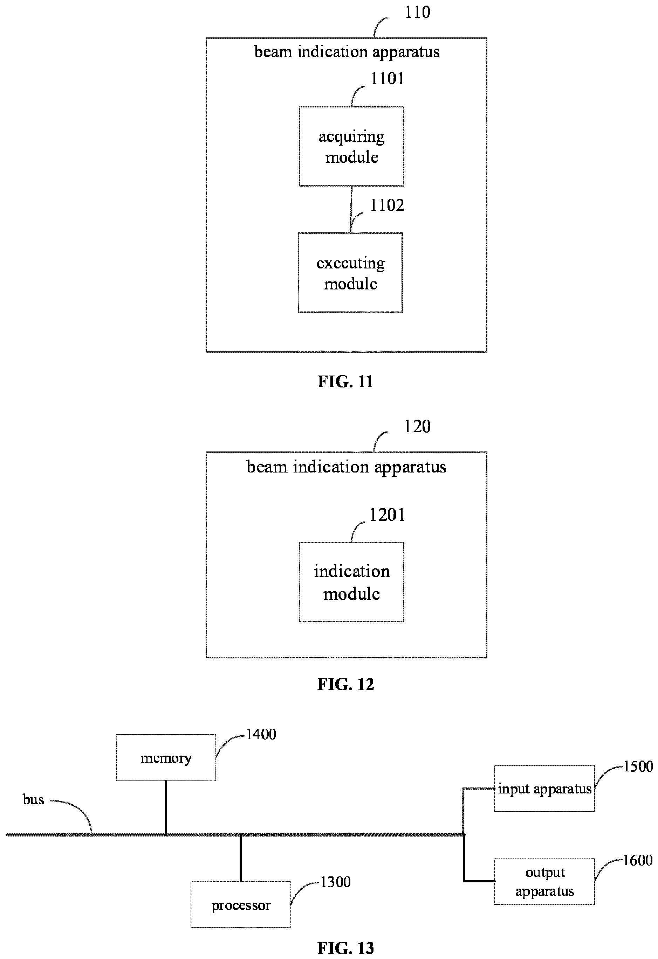

FIG. 11 is a schematic block diagram of a beam indication apparatus 110 provided by embodiments of the present disclosure. The apparatus is applied to a user equipment.

As shown in FIG. 11, the beam indication apparatus 110 includes an acquiring module 1101 and an executing module 1102.

The acquiring module 1101 is configured to acquire first indication information. The first indication information is configured to indicate a target unified beam.

The executing module 1102 is configured to perform at least two types of communication with a network device using the target unified beam, and the communication includes communication of a channel and/or a reference signal.

Further, in a possible implementation of embodiments of the present disclosure, the first indication information includes a target unified transmission configuration indicator TCI state index or index combination.

In a possible implementation of embodiments of the present disclosure, the target unified TCI state index corresponds to a transmission and reception point TRP index or a coreset pool index.

In a possible implementation of embodiments of the present disclosure, the target unified TCI state index corresponds to one or more reference signals, and each of the one or more reference signals is configured to indicate at least one of an uplink target unified beam and a downlink target unified beam.

In a possible implementation of embodiments of the present disclosure, the acquiring module 1101 includes a receiving unit and a determining unit.

The receiving unit is configured to receive from the network device a control element signaling of a medium access control layer, MAC CE signaling. The MAC CE signaling carries second indication information for activating one or more TCI state indexes, and one TCI state index corresponds to one TRP index or one coreset pool index.

The determining unit is configured to determine the first indication information according to the one or more TCI state indexes activated by the second indication information.

Further, in a possible implementation of embodiments of the present disclosure, one TCI state index is activated by the second indication information for one TRP index or one coreset pool index. The determining unit is configured to determine the one TCI state index activated by the second indication information as the first indication information.

In a possible implementation of embodiments of the present disclosure, multiple TCI state indexes are activated by the second indication information for one TRP index or one coreset pool index. The determining unit is further configured to receive a first downlink control information DCI signaling transmitted by the network device, the first DCI signaling carries the first indication information; and the first indication information includes one target unified TCI state index or index combination among the multiple TCI state indexes activated by the second indication information.

In a possible implementation of embodiments of the present disclosure, the apparatus further includes a transmitting module. The transmitting module is configured to transmit first hybrid automatic repeat request HARQ feedback information to the network device. The first HARQ feedback information is configured to indicate to the network device whether the first DCI signaling is successfully received; and an HARQ feedback resource used for transmitting the first HARQ feedback information is configured by the first DCI signaling, or is default.

In a possible implementation of embodiments of the present disclosure, the executing module 1102 is configured to receive, using the target unified beam on a PDCCH, a second DCI signaling transmitted by the network device. The second DCI signaling carries resource configuration information for configuring a communication resource for a reference signal, a physical random access channel PRACH, a physical uplink shared channel PUSCH, a physical uplink control channel PUCCH and/or a physical downlink shared channel PDSCH.

In a possible implementation of embodiments of the present disclosure, the first DCI signaling further carries resource configuration information for configuring a communication resource for at least one of a reference signal, a PRACH, a PUSCH, a PUCCH or a PDSCH.

In a possible implementation of embodiments of the present disclosure, the transmitting module is further configured to transmit second HARQ feedback information to the network device. The second HARQ feedback information includes: first feedback information, configured to feed back whether the first DCI signaling is successfully received; and/or second feedback information, configured to feed back whether the PDSCH and/or a downlink reference signal configured by the first DCI signaling is successfully received.

In a possible implementation of embodiments of the present disclosure, HARQ feedback resources used for transmitting the first feedback information and/or the second feedback information are configured by the first DCI signaling or are default.

In a possible implementation of embodiments of the present disclosure, the HARQ feedback resources used for transmitting the first feedback information and/or the second feedback information are the same HARQ feedback resources or different HARQ feedback resources.

In a possible implementation of embodiments of the present disclosure, the first feedback information and/or the second feedback information correspond to the same or different bits in the same HARQ feedback resource.

In a possible implementation of embodiments of the present disclosure, a transmitting beam for transmitting the first HARQ feedback information is a transmitting beam corresponding to a target unified beam corresponding to the target unified TCI state index or index combination in the first DCI signaling, or a transmitting beam corresponding to a receiving beam for receiving the first DCI signaling.

In a possible implementation of embodiments of the present disclosure, a transmitting beam for transmitting the second HARQ feedback information is a transmitting beam corresponding to a target unified beam corresponding to the target unified TCI state index or index combination in the first DCI signaling, or a transmitting beam corresponding to a receiving beam for receiving the first DCI signaling.

In a possible implementation of embodiments of the present disclosure, the apparatus further includes a communicating module. The communicating module is configured to perform the communication with the network device using the communication resource configured according to the resource configuration information carried in the first DCI signaling.

In a possible implementation of embodiments of the present disclosure, in a case where a time interval between the communication and the first DCI signaling is less than a threshold, the communication adopts a same beam as the first DCI signaling; and in a case where the time interval between the communication and the first DCI signaling is greater than or equal to the threshold, the communication adopts a target unified beam corresponding to the target unified TCI state index or index combination in the first DCI signaling.

In a possible implementation of embodiments of the present disclosure, the threshold is notified by the network device. The transmitting module is further configured to transmit a reference time to the network device, and the reference time is configured to be used by the network device to determine the threshold. The reference time includes a time for decoding the first DCI signaling, a time for an HARQ feedback corresponding to the first DCI signaling, and a time for beam switch; or the reference time includes the time for the HARQ feedback corresponding to the first DCI signaling and the time for the beam switch.

In a possible implementation of embodiments of the present disclosure, the threshold is default to be set in the UE.

In a possible implementation of embodiments of the present disclosure, the UE uses one or more receiving beams to receive one or more transmissions of the first DCI signaling.

In a possible implementation of embodiments of the present disclosure, the first DCI signaling is a DCI signaling for downlink resource scheduling, a DCI signaling for uplink resource scheduling, or a DCI signaling for uplink and downlink resource scheduling, or a DCI signaling only for uplink and downlink target unified beam indication.

In a possible implementation of embodiments of the present disclosure, the target unified TCI state index includes at least one of a downlink target unified TCI state index, an uplink target unified TCI state index, or an uplink and downlink target unified TCI state index.

In a possible implementation of embodiments of the present disclosure, the acquiring module 1101 is further configured to receive third indication information transmitted by the network device. The third indication information is configured to indicate the UE to adopt the target unified beam or a dedicated beam to perform the at least two types of communication.

In a possible implementation of embodiments of the present disclosure, the first indication information further includes indication information of the at least two types of communication.

In a possible implementation of embodiments of the present disclosure, the channel includes at least one of or any combination of the following channels:
a physical downlink control channel, PDCCH;
a physical downlink shared channel, PDSCH;
a physical uplink control channel, PUCCH;
a physical uplink shared channel, PUSCH;
a physical broadcast channel, PBCH; or
a physical random access channel, PRACH.

In a possible implementation of embodiments of the present disclosure, the reference signal includes at least one of or any combination of the following signals:
a channel state information-reference signal, CSI-RS;
a synchronization signal and PBCH block, SSB;
a demodulation reference signal, DMRS;
a positioning reference signal, PRS;
a tracking reference signal, TRS; or
a sounding reference signal, SRS.

In embodiments of the present disclosure, the first indication information of the target unified beam is transmitted to the UE by the network device, so that after receiving the first indication information of the target unified beam transmitted by the network device, the UE communicates with the network device using the target unified beam on at least two channels, or at least two reference signals, or at least one reference signal and at least one channel. Through just once communication of the first indication information of the target unified beam, the target unified beam can be used for multiple types of communication including the reference signal communication and the channel communication, so that separate beam indications for each channel communication or reference signal communication are avoided, thereby saving the signaling overheads.

Corresponding to the information communication method provided by the above-mentioned embodiments, embodiments of the present disclosure also provide a beam indication apparatus. Since the beam indication apparatus provided in embodiments of the present disclosure corresponds to the beam indication method provided in the above-mentioned embodiments, the implementations of the beam indication method are also applicable to the beam indication apparatus provided in embodiments of the present disclosure here, which will not be elaborated in embodiments of the present disclosure here.

FIG. 12 is a schematic block diagram of a beam indication apparatus 120 provided by embodiments of the present disclosure. The apparatus is applied to a network device.

As shown in FIG. 12, the beam indication apparatus 120 includes an indication module 1201.

The indication module 1201 is configured to transmit first indication information to a user equipment UE. The first indication information is configured to indicate a target unified beam to enable the UE to perform at least two types of communication with the network device using the target unified beam, and the communication includes communication of a channel and/or a reference signal.

Further, in a possible implementation of embodiments of the present disclosure, the first indication information includes a target unified transmission configuration indicator TCI state index or index combination.

Further, in a possible implementation of embodiments of the present disclosure, the target unified TCI state index corresponds to a transmission and reception point TRP index or a coreset pool index.

Further, in a possible implementation of embodiments of the present disclosure, the target unified TCI state index corresponds to one or more reference signals, and each of the one or more reference signals is configured to indicate at least one of an uplink target unified beam and a downlink target unified beam.

Further, in a possible implementation of embodiments of the present disclosure, the indication module 1201 is configured to transmit to the UE a control element signaling of a medium access control layer, MAC CE signaling. The MAC CE signaling carries second indication information for activating one or more TCI state indexes, and one TCI state index corresponds to one TRP index or one coreset pool index. The one or more TCI state indexes activated by the second indication information are configured to determine the first indication information.

In a possible implementation of embodiments of the present disclosure, one TCI state index is activated by the second indication information for one TRP index or one coreset pool index; and the first indication information represents the one TCI state index activated by the second indication information.

In a possible implementation of embodiments of the present disclosure, multiple TCI state indexes are activated by the second indication information for one TRP index or one coreset pool index. The indication module 1201 is configured to transmit a first downlink control information DCI signaling to the UE, and the first DCI signaling carries the first indication information. The first indication information includes one target unified TCI state index or index combination among the multiple TCI state indexes activated by the second indication information.

In a possible implementation of embodiments of the present disclosure, the apparatus further includes a receiving module. The receiving module is configured to receive first hybrid automatic repeat request HARQ feedback information transmitted by the UE. The first HARQ feedback information is configured to indicate to the network device whether the first DCI signaling is successfully received. An HARQ feedback resource used for transmitting the first HARQ feedback information is configured by the first DCI signaling or is default.

In a possible implementation of embodiments of the present disclosure, the apparatus further includes a transmitting module. The transmitting module is configured to transmit a second DCI signaling to the UE on a PDCCH, so that the UE receives the second DCI signaling using the target unified beam. The second DCI signaling carries resource configuration information for configuring a communication resource for a reference signal, a physical random access channel PRACH, a physical uplink shared channel PUSCH, a physical uplink control channel PUCCH and/or a physical downlink shared channel PDSCH.

In a possible implementation of embodiments of the present disclosure, the first DCI signaling further carries resource configuration information for configuring a communication resource for at least one of a reference signal, a PRACH, a PUSCH, a PUCCH or a PDSCH.

In a possible implementation of embodiments of the present disclosure, the receiving module is further configured to receive second HARQ feedback information transmitted by the UE. The second HARQ feedback information includes: first feedback information, configured to feed back whether the first DCI signaling is successfully received; and/or second feedback information, configured to feed back whether the PDSCH and/or a downlink reference signal configured by the first DCI signaling is successfully received.

In a possible implementation of embodiments of the present disclosure, HARQ feedback resources used for transmitting the first feedback information and/or the second feedback information are configured by the first DCI signaling or are default.

In a possible implementation of embodiments of the present disclosure, the HARQ feedback resources used for transmitting the first feedback information and/or the second feedback information are the same HARQ feedback resources or different HARQ feedback resources.

In a possible implementation of embodiments of the present disclosure, the first feedback information and/or the second feedback information correspond to the same or different bits in the same HARQ feedback resource.

In a possible implementation of embodiments of the present disclosure, a transmitting beam for transmitting the first HARQ feedback information is a transmitting beam corresponding to a target unified beam corresponding to the target unified TCI state index or index combination in the first DCI signaling, or a transmitting beam corresponding to a receiving beam for receiving the first DCI signaling.

In a possible implementation of embodiments of the present disclosure, a transmitting beam for transmitting the second HARQ feedback information is a transmitting beam corresponding to a target unified beam corresponding to the target unified TCI state index or index combination in the first DCI signaling, or a transmitting beam corresponding to a receiving beam for receiving the first DCI signaling.

In a possible implementation of embodiments of the present disclosure, the apparatus further includes a communicating module. The communicating module is configured to perform the communication with the UE according to the resource configuration information carried in the first DCI signaling.

In a possible implementation of embodiments of the present disclosure, an indication that a time interval between the communication and the first DCI signaling is less than a threshold represents an indication that the UE performs the communication using a same beam as the first DCI signaling; and an indication that the time interval between the communication and the first DCI signaling is greater than or equal to the threshold represents an indication that the UE performs the communication using a target unified beam corresponding to the target unified TCI state index or index combination in the first DCI signaling.

In a possible implementation of embodiments of the present disclosure, the transmitting module is further configured to receive a reference time transmitted by the UE, and transmit indication information of the threshold to the UE. The reference time includes a time for the UE to decode the first DCI signaling, a time for the UE to perform an HARQ feedback corresponding to the first DCI signaling, and a time for beam switch; or the reference time includes the time for the UE to perform the HARQ feedback corresponding to the first DCI signaling and the time for the beam switch.

In a possible implementation of embodiments of the present disclosure, the first DCI signaling is transmitted for one or more times, and the UE is indicated to receive the first DCI signaling using one or more receiving beams.

In a possible implementation of embodiments of the present disclosure, the first DCI signaling is a DCI signaling for downlink resource scheduling, a DCI signaling for uplink resource scheduling, a DCI signaling for uplink and downlink resource scheduling, or a DCI signaling only for uplink and downlink target unified beam indication.

In a possible implementation of embodiments of the present disclosure, the target unified TCI state index includes at least one of a downlink target unified TCI state index, an uplink target unified TCI state index, or an uplink and downlink target unified TCI state index.

In a possible implementation of embodiments of the present disclosure, the transmitting module is further configured to transmit third indication information to the UE, and the third indication information is configured to indicate the UE to adopt the target unified beam or a dedicated beam to perform the at least two types of communication.

In a possible implementation of embodiments of the present disclosure, the first indication information further includes indication information of the at least two types of communication.

In a possible implementation of embodiments of the present disclosure, the channel includes at least one of or any combination of the following channels:
a physical downlink control channel, PDCCH;
a physical downlink shared channel, PDSCH;
a physical uplink control channel, PUCCH;
a physical uplink shared channel, PUSCH;
a physical broadcast channel, PBCH; or
a physical random access channel, PRACH.

In a possible implementation of embodiments of the present disclosure, the reference signal includes at least one of or any combination of the following signals:
a channel state information-reference signal, CSI-RS;
a synchronization signal and PBCH block, SSB;
a demodulation reference signal, DMRS;
a positioning reference signal, PRS;
a tracking reference signal, TRS; or
a sounding reference signal, SRS.

In embodiments of the present disclosure, the first indication information of the target unified beam is transmitted to the UE by the network device, so that after receiving the first indication information of the target unified beam transmitted by the network device, the UE communicates with the network device using the target unified beam on at least two channels, or at least two reference signals, or at least one reference signal and at least one channel. Through just once communication of the first indication information of the target unified beam, the target unified beam can be used for multiple types of communication including the reference signal communication and the channel communication, so that separate beam indications for each channel communication or reference signal communication are avoided, thereby saving the signaling overheads.

In order to realize the above embodiments, the present disclosure also proposes a communication device.

The communication device provided in embodiments of the present disclosure includes a processor, a transceiver, a memory, and an executable program stored in the memory and executable by the processor. The processor implements the foregoing method when executing the executable program.

The communication device may be the aforementioned network device or terminal.

The processor may include various types of storage media, which are non-transitory computer storage media that can continue memorizing information stored thereon after the communication device is powered off. Here, the communication device includes a network device or a terminal.

The processor may be connected to the memory through a bus or the like, for reading the executable program stored in the memory, such as at least one of those shown in FIG. 1 to FIG. 5, or FIG. 6 to FIG. 10.

In order to realize the above embodiments, the present disclosure also proposes a computer storage medium.

The computer storage medium provided in embodiments of the present disclosure has stored therein an executable program that, when executed by a processor, causes the foregoing method, such as at least one of those shown in FIG. 1 to FIG. 5, or FIG. 6 to FIG. 10, to be implemented.

FIG. 13 is a block diagram of a communication device of a beam indication method according to embodiments of the present disclosure. The communication device is intended to represent various forms of digital computers, such as a laptop computer, a desktop computer, a workstation, a personal digital assistant, a server, a blade server, a mainframe computer, and other suitable computers. The communication device may also represent various forms of mobile devices, such as a personal digital processor, a cellular phone, a smart phone, a wearable device, and other similar computing devices. Components shown herein, their connections and relationships, and their functions are only used for illustrations, and are not intended to limit implementations of the present disclosure as described and/or claimed herein.

As shown in FIG. 13, the communication device includes: one or more processors 1300, a memory 1400, and an interface for connecting various components, including a high-speed interface and a low-speed interface. The various components are interconnected using different buses, and may be mounted on a common mainboard or otherwise as desired. The processor may process instructions executed within the communication device, including instructions stored in or on the memory to display graphical information of a graphical user interface (GUI) on an external input/output device, such as a display device coupled to the interface. In other embodiments, multiple processors and/or multiple buses may be used with multiple memories, if desired. Likewise, multiple communication devices may be connected, with each device providing some of the necessary operations (e.g., as a server array, a group of blade servers, or a multi-processor system). In FIG. 13, as an example, a processor 1300 is provided.

The memory 1400 is the non-transitory computer-readable storage medium provided in embodiments of the present disclosure. The memory has stored therein instructions that are executable by at least one processor to cause the at least one processor to execute the beam indication method provided in embodiments of the present disclosure. The non-transitory computer-readable storage medium of the present disclosure has stored therein computer instructions, and the computer instructions are configured to cause a computer to execute the beam indication method provided in embodiments of the present disclosure.

As a non-transitory computer-readable storage medium, the memory 1400 can be used to store non-transitory software programs, non-transitory computer-executable programs and modules, for example, program instructions/modules corresponding to the beam indication method in embodiments of the present disclosure, such as the acquiring module 1101 and the executing module 1102 as shown in FIG. 11, or the indication module 1201 as shown in FIG. 12. The processor 1300 executes various functional applications and data processing of the server, i.e., implements the beam indication method as described in the above method embodiments, by running the non-transitory software programs, instructions and modules stored in the memory 1400.

The memory 1400 may include a storage program area and a storage data area, the storage program area may store an operating system, and an application program required for at least one function; and the storage data area may store data created according to the use of a positioning communication device, and the like. Additionally, the memory 1400 may include a high-speed random access memory, and may also include a non-transitory memory, such as at least one magnetic disk storage device, flash memory device, or other non-transitory solid-state storage device. Optionally, the memory 1400 may optionally include memories located remotely from the processor 1300, and these remote memories may be connected to the positioning communication device through a network. Examples of the above-mentioned network include, but are not limited to, the Internet, an intranet, a local area network, a mobile communication network, or a combination thereof.

The communication device may further include: an input apparatus 1500 and an output apparatus 1600. The processor 1300, the memory 1400, the input apparatus 1500, and the output apparatus 1600 may be connected by a bus or in other ways, such as connected by a bus as shown in FIG. 13 as an example.

The input apparatus 1500 can receive numerical or character information input and generate key signal input related to user settings and functional control of the positioning communication device, such as a touch screen, a keypad, a mouse, a trackpad, touchpad, a pointing stick, one or more mouse buttons, trackballs, joysticks, and other input apparatus. The output apparatus 1600 may include a display device, an auxiliary lighting device (e.g., an LED), a haptic feedback device (e.g., a vibration motor), and the like. The display device may include, but is not limited to, a liquid crystal display (LCD), a light emitting diode (LED) display, and a plasma display. In some embodiments, the display device may be a touch screen.

Various embodiments of the systems and techniques described herein may be implemented in a digital electronic circuit system, an integrated circuit system, an application-specific integrated circuit (ASIC), a computer hardware, a firmware, a software, and/or a combination thereof. These various embodiments may include: being implemented in one or more computer programs executable and/or interpretable on a programmable system including at least one programmable processor. The programmable processor may be a specific or generic programmable processor that may receive data and instructions from a storage system, at least one input apparatus, and at least one output apparatus, and transmit data and instructions to the storage system, the at least one input apparatus, and the at least one output apparatus.

These computational programs (also referred to as programs, software, software applications, or codes) include machine instructions for programmable processors, and may be implemented using high-level procedural and/or object-oriented programming languages, and/or assembly/machine languages. As used herein, the terms "machine-readable medium" and "computer-readable medium" refer to any computer program product, device, and/or apparatus (such as, a magnetic disk, an optical disk, a memory, a programmable logic device (PLD)) for providing machine instructions and/or data to a programmable processor, including a machine-readable medium that receives machine instructions as machine-readable signals. The term "machine-readable signal" refers to any signal for providing machine instructions and/or data to a programmable processor.

To provide interaction with a user, the systems and techniques described herein may be implemented on a computer that includes: a display apparatus (e.g., a cathode-ray tube (CRT) or a liquid crystal display (LCD) monitor) for displaying information to a user; and a keyboard and a pointing apparatus (e.g., a mouse or a trackball) through which the user can provide an input to the computer. Other kinds of apparatuses can also be used to provide interaction with the user; for example, a feedback provided to the user can be any form of sensory feedback (e.g., a visual feedback, an auditory feedback, or a tactile feedback); and the input from the user may be received in any form (including acoustic input, voice input, or tactile input).

The systems and techniques described herein can be implemented in a computing system including a back-end component (e.g., as a data server), a computing system including a middleware component (e.g., an application server), a computing system including a front-end component (e.g., a user computer having a graphical user interface or a web browser through which a user may interact with implementations of the systems and techniques described herein), or a computing system that includes any combination of the back-end component, the middleware component, or the front-end component. The components of the system may be connected with each other by any form or medium of digital data communication (e.g., a communication network). Examples of the communication network include a local area network (LAN), a wide area network (WAN), and the Internet.

A computer system may include a client and a server. The client and the server are generally remote from each other and usually interact with each other through a communication network. A relationship of the client and the server is generated by computer programs that run on respective computers and have a client-server relationship with each other.

Other embodiments of the present disclosure will be apparent to those skilled in the art from consideration of the specification and practice of the disclosure disclosed here. The present disclosure is intended to cover any variations, uses, or adaptations of the present disclosure following the general principles thereof and including such departures from the present disclosure as come within known or customary practice in the art. It is intended that the specification and embodiments be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A beam indication method, applied to a user equipment UE and comprising:
acquiring first indication information, wherein the first indication information is configured to indicate a target unified beam; and
performing at least two types of communication with a network device using the target unified beam, wherein the communication comprises communication of a channel and/or a reference signal.

2. The beam indication method according to claim 1, wherein the first indication information comprises a target unified transmission configuration indicator TCI state index or index combination.

3. The beam indication method according to claim 2, wherein the target unified TCI state index corresponds to a transmission and reception point TRP index or a coreset pool index.

4. The beam indication method according to claim 2, wherein the target unified TCI state index corresponds to one or more reference signals, and each of the one or more reference signals is configured to indicate at least one of an uplink target unified beam and a downlink target unified beam.

5. The beam indication method according to claim 1, wherein acquiring the first indication information comprises:
receiving from the network device a control element signaling of a medium access control layer, MAC CE signaling, wherein the MAC CE signaling carries second indication information for activating one or more TCI state indexes, and one TCI state index corresponds to one TRP index or one coreset pool index; and
determining the first indication information according to the one or more TCI state indexes activated by the second indication information.

6. The beam indication method according to claim 5, wherein one TCI state index is activated by the second indication information for one TRP index or one coreset pool index, and wherein determining the first indication information according to the one or more TCI state indexes activated by the second indication information comprises:
determining the one TCI state index activated by the second indication information as the first indication information.

7. The beam indication method according to claim 5, wherein multiple TCI state indexes are activated by the second indication information for one TRP index or one coreset pool index, and wherein determining the first indication information according to the one or more TCI state indexes activated by the second indication information comprises:
receiving a first downlink control information DCI signaling transmitted by the network device, wherein the first DCI signaling carries the first indication information;
wherein the first indication information comprises one target unified TCI state index or index combination among the multiple TCI state indexes activated by the second indication information.

8. The beam indication method according to claim 7, further comprising:
transmitting first hybrid automatic repeat request HARQ feedback information to the network device;
wherein the first HARQ feedback information is configured to indicate to the network device whether the first DCI signaling is successfully received; and an HARQ feedback resource used for transmitting the first HARQ feedback information is configured by the first DCI signaling, or is default.

9. The beam indication method according to claim 8, wherein performing at least two types of communication with the network device using the target unified beam comprises:
receiving, using the target unified beam on a PDCCH, a second DCI signaling transmitted by the network device;
wherein the second DCI signaling carries resource configuration information for configuring a communication resource for a reference signal, a physical random access channel PRACH, a physical uplink shared channel PUSCH, a physical uplink control channel PUCCH and/or a physical downlink shared channel PDSCH.

10. The beam indication method according to claim 7, wherein the first DCI signaling further carries resource configuration information for configuring a communication resource for at least one of a reference signal, a PRACH, a PUSCH, a PUCCH or a PDSCH.

11. The beam indication method according to claim 10, further comprising: transmitting second HARQ feedback information to the network device;
wherein the second HARQ feedback information comprises:
first feedback information, configured to feed back whether the first DCI signaling is successfully received; and/or
second feedback information, configured to feed back whether the PDSCH and/or a downlink reference signal configured by the first DCI signaling is successfully received.

12. The beam indication method according to claim 11, wherein HARQ feedback resources used for transmitting the first feedback information and/or the second feedback information are configured by the first DCI signaling or are default.

13. The beam indication method according to claim 12, wherein the HARQ feedback resources used for transmitting the first feedback information and/or the second feedback information are the same HARQ feedback resources or different HARQ feedback resources.

14. The beam indication method according to claim 13, wherein the first feedback information and/or the second feedback information correspond to the same or different bits in the same HARQ feedback resource.

15. The beam indication method according to claim 8, wherein a transmitting beam for transmitting the first HARQ feedback information is a transmitting beam corresponding to a target unified beam corresponding to the target unified TCI state index or index combination in the first DCI signaling, or a transmitting beam corresponding to a receiving beam for receiving the first DCI signaling.

16. The beam indication method according to claim 11, wherein a transmitting beam for transmitting the second HARQ feedback information is a transmitting beam corresponding to a target unified beam corresponding to the target unified TCI state index or index combination in the first DCI signaling, or a transmitting beam corresponding to a receiving beam for receiving the first DCI signaling.

17. The beam indication method according to claim 10, further comprising:
performing the communication with the network device using the communication resource configured according to the resource configuration information carried in the first DCI signaling.

18. The beam indication method according to claim 17, wherein in a case where a time interval between the communication and the first DCI signaling is less than a threshold, the communication adopts a same beam as the first DCI signaling; and
in a case where the time interval between the communication and the first DCI signaling is greater than or equal to the threshold, the communication adopts a target unified beam corresponding to the target unified TCI state index or index combination in the first DCI signaling.

19. The beam indication method according to claim 18, wherein the threshold is notified by the network device;
wherein the method further comprises transmitting a reference time to the network device, wherein the reference time is configured to be used by the network device to determine the threshold;
wherein the reference time comprises a time for decoding the first DCI signaling, a time for an HARQ feedback corresponding to the first DCI signaling, and a time for beam switch; or
the reference time comprises the time for the HARQ feedback corresponding to the first DCI signaling and the time for the beam switch.

20. The beam indication method according to claim 18, wherein the threshold is default to be set in the UE.

21. The beam indication method according to claim 7, wherein the UE uses one or more receiving beams to receive one or more transmissions of the first DCI signaling.

22. The beam indication method according to claim 7, wherein the first DCI signaling is a DCI signaling for downlink resource scheduling, a DCI signaling for uplink resource scheduling, or a DCI signaling for uplink and downlink resource scheduling, or a DCI signaling only for uplink and downlink target unified beam indication.

23. The beam indication method according to claim 2, wherein the target unified TCI state index comprises at least one of a downlink target unified TCI state index, an uplink target unified TCI state index, or an uplink and downlink target unified TCI state index.

24. The beam indication method according to any one of claims 1-23, further comprising:
receiving third indication information transmitted by the network device, wherein the third indication information is configured to indicate the UE to adopt the target unified beam or a dedicated beam to perform the at least two types of communication.

25. The beam indication method according to any one of claims 1-24, wherein the first indication information further comprises indication information of the at least two types of communication.

26. The beam indication method according to any one of claims 1-25, wherein the channel comprises at least one of or any combination of the following channels:
a physical downlink control channel, PDCCH;
a physical downlink shared channel, PDSCH;
a physical uplink control channel, PUCCH;
a physical uplink shared channel, PUSCH;
a physical broadcast channel, PBCH; or
a physical random access channel, PRACH.

27. The beam indication method according to any one of claims 1-26, wherein the reference signal comprises at least one of or any combination of the following signals:
a channel state information-reference signal, CSI-RS;
a synchronization signal and PBCH block, SSB;
a demodulation reference signal, DMRS;
a positioning reference signal, PRS;
a tracking reference signal, TRS; or
a sounding reference signal, SRS.

28. A beam indication method, applied to a network device and comprising:
transmitting first indication information to a user equipment UE,
wherein the first indication information is configured to indicate a target unified beam to enable the UE to perform at least two types of communication with the network device using the target unified beam, and wherein the communication comprises communication of a channel and/or a reference signal.

29. The beam indication method according to claim 28, wherein the first indication information comprises a target unified transmission configuration indicator TCI state index or index combination.

30. The beam indication method according to claim 29, wherein the target unified TCI state index corresponds to a transmission and reception point TRP index or a coreset pool index.

31. The beam indication method according to claim 29, wherein the target unified TCI state index corresponds to one or more reference signals, and each of the one or more reference signals is configured to indicate at least one of an uplink target unified beam and a downlink target unified beam.

32. The beam indication method according to claim 28, wherein transmitting the first indication information to the user equipment UE comprises:
transmitting to the UE a control element signaling of a medium access control layer, MAC CE signaling, wherein the MAC CE signaling carries second indication information for activating one or more TCI state indexes, and one TCI state index corresponds to one TRP index or one coreset pool index; and
wherein the one or more TCI state indexes activated by the second indication information are configured to determine the first indication information.

33. The beam indication method according to claim 32, wherein one TCI state index is activated by the second indication information for one TRP index or one coreset pool index; and
wherein the first indication information represents the one TCI state index activated by the second indication information.

34. The beam indication method according to claim 32, wherein multiple TCI state indexes are activated by the second indication information for one TRP index or one coreset pool index, and
wherein transmitting the first indication information to the user equipment UE further comprises:
transmitting a first downlink control information DCI signaling to the UE, wherein the first DCI signaling carries the first indication information;
wherein the first indication information comprises one target unified TCI state index or index combination among the multiple TCI state indexes activated by the second indication information.

35. The beam indication method according to claim 32, further comprising:
receiving first hybrid automatic repeat request HARQ feedback information transmitted by the UE;
wherein the first HARQ feedback information is configured to indicate to the network device whether the first DCI signaling is successfully received; and an HARQ feedback resource used for transmitting the first HARQ feedback information is configured by the first DCI signaling, or is default.

36. The beam indication method according to claim 35, further comprising:
transmitting a second DCI signaling to the UE on a PDCCH, so that the UE receives the second DCI signaling using the target unified beam;
wherein the second DCI signaling carries resource configuration information for configuring a communication resource for a reference signal, a physical random access channel PRACH, a physical uplink shared channel PUSCH, a physical uplink control channel PUCCH and/or a physical downlink shared channel PDSCH.

37. The beam indication method according to claim 35, wherein the first DCI signaling further carries resource configuration information for configuring a communication resource for at least one of a reference signal, a PRACH, a PUSCH, a PUCCH or a PDSCH.

38. The beam indication method according to claim 37, further comprising: receiving second HARQ feedback information transmitted by the UE;
wherein the second HARQ feedback information comprises:
first feedback information, configured to feed back whether the first DCI signaling is successfully received; and/or
second feedback information, configured to feed back whether the PDSCH and/or a downlink reference signal configured by the first DCI signaling is successfully received.

39. The beam indication method according to claim 38, wherein HARQ feedback resources used for transmitting the first feedback information and/or the second feedback information are configured by the first DCI signaling or are default.

40. The beam indication method according to claim 39, wherein the HARQ feedback resources used for transmitting the first feedback information and/or the second feedback information are the same HARQ feedback resources or different HARQ feedback resources.

41. The beam indication method according to claim 40, wherein the first feedback information and/or the second feedback information correspond to the same or different bits in the same HARQ feedback resource.

42. The beam indication method according to claim 35, wherein a transmitting beam for transmitting the first HARQ feedback information is a transmitting beam corresponding to a target unified beam corresponding to the target unified TCI state index or index combination in the first DCI signaling, or a transmitting beam corresponding to a receiving beam for receiving the first DCI signaling.

43. The beam indication method according to claim 38, wherein a transmitting beam for transmitting the second HARQ feedback information is a transmitting beam corresponding to a target unified beam corresponding to the target unified TCI state index or index combination in the first DCI signaling, or a transmitting beam corresponding to a receiving beam for receiving the first DCI signaling.

44. The beam indication method according to claim 37, further comprising:
performing the communication with the UE according to the resource configuration information carried in the first DCI signaling.

45. The beam indication method according to claim 42, wherein an indication that a time interval between the communication and the first DCI signaling is less than a threshold represents an indication that the UE performs the communication using a same beam as the first DCI signaling; and
an indication that the time interval between the communication and the first DCI signaling is greater than or equal to the threshold represents an indication that the UE performs the communication using a target unified beam corresponding to the target unified TCI state index or index combination in the first DCI signaling.

46. The beam indication method according to claim 45, further comprising: receiving a reference time transmitted by the UE, and transmitting indication information of the threshold to the UE;
wherein the reference time comprises a time for the UE to decode the first DCI signaling, a time for the UE to perform an HARQ feedback corresponding to the first DCI signaling, and a time for beam switch; or
the reference time comprises the time for the UE to perform the HARQ feedback corresponding to the first DCI signaling and the time for the beam switch.

47. The beam indication method according to claim 34, wherein the first DCI signaling is transmitted for one or more times, and the UE is indicated to receive the first DCI signaling using one or more receiving beams.

48. The beam indication method according to claim 34, wherein the first DCI signaling is a DCI signaling for downlink resource scheduling, a DCI signaling for uplink resource scheduling, a DCI signaling for uplink and downlink resource scheduling, or a DCI signaling only for uplink and downlink target unified beam indication.

49. The beam indication method according to claim 29, wherein the target unified TCI state index comprises at least one of a downlink target unified TCI state index, an uplink target unified TCI state index, or an uplink and downlink target unified TCI state index.

50. The beam indication method according to any one of claims 28-49, further comprising:
transmitting third indication information to the UE, wherein the third indication information is configured to indicate the UE to adopt the target unified beam or a dedicated beam to perform the at least two types of communication.

51. The beam indication method according to any one of claims 28-50, wherein the first indication information further comprises indication information of the at least two types of communication.

52. The beam indication method according to any one of claims 28-51, wherein the channel comprises at least one of or any combination of the following channels:
a physical downlink control channel, PDCCH;
a physical downlink shared channel, PDSCH;
a physical uplink control channel, PUCCH;
a physical uplink shared channel, PUSCH;
a physical broadcast channel, PBCH; or
a physical random access channel, PRACH.

53. The beam indication method according to any one of claims 28-52, wherein the reference signal comprises at least one of or any combination of the following signals:
a channel state information-reference signal, CSI-RS;
a synchronization signal and PBCH block, SSB;
a demodulation reference signal, DMRS;
a positioning reference signal, PRS;
a tracking reference signal, TRS; or
a sounding reference signal, SRS.

54. A beam indication apparatus, applied to a user equipment UE and comprising:
an acquiring module, configured to acquire first indication information, wherein the first indication information is configured to indicate a target unified beam; and
an executing module, configured to perform at least two types of communication with a network device using the target unified beam, wherein the communication comprises communication of a channel and/or a reference signal.

55. A beam indication apparatus, applied to a network device and comprising:
an indication module, configured to transmit first indication information to a user equipment UE,
wherein the first indication information is configured to indicate a target unified beam to enable the UE to perform at least two types of communication with the network device using the target unified beam, and wherein the communication comprises communication of a channel and/or a reference signal.

56. A communication device, comprising:
a transceiver;
a memory; and
a processor, connected to the transceiver and the memory, and configured to control wireless signal transmission and reception of the transceiver by executing computer-executable instructions stored in the memory, and implement the method according to any one of claims 1 to 27 or the method according to any one of claims 28 to 53.

57. A computer storage medium having stored therein computer-executable instructions that, when executed by a processor, cause the method according to any one of claims 1 to 27 or the method according to any one of claims 28 to 53 to be implemented.
